# EUROPEAN PATENT APPLICATION

(11) **EP 4 842 102 A1**
(43) Date of publication of application: **18.11.2026**
(21) Application number: 24921737.3
(22) Date of filing: 12.12.2024
(51) Int. Cl.: H04W 72/0446

(54) **COMMUNICATION METHOD AND APPARATUS THEREFOR**

(30) Priority: 31.01.2024 CN 202410142537
(71) Applicant: Huawei Technologies Co., Ltd., Shenzhen, Guangdong 518129 (CN)
(72) Inventor: HU, Xingxing, Shenzhen, Guangdong 518129 (CN); LU, Rui, Shenzhen, Guangdong 518129 (CN)
(74) Representative: Huawei European IPR
(86) International application number: PCT/CN2024/138799
(87) International publication number: WO 2025/161715

(57) **Abstract**

This application provides a communication method and an apparatus thereof. A terminal device receives, in a first cell, first information from a first network device, where the first information indicates a plurality of pieces of time domain configuration information and a plurality of effective conditions, the plurality of pieces of time domain configuration information are in one-to-one correspondence with the plurality of effective conditions, and the first cell is a serving cell of the terminal device; and when determining that a first effective condition is met, the terminal device receives, in a second cell, a synchronization signal and physical broadcast channel block SSB from a second network device based on first time domain configuration information corresponding to the first effective condition, where the second cell is a neighboring cell of the first cell, the first effective condition belongs to the plurality of effective conditions, and the first time domain configuration information belongs to the plurality of pieces of time domain configuration information. In comparison with configuring a plurality of pieces of time domain configuration information for the terminal device by a network device at a plurality of times, configuring the plurality of pieces of time domain configuration information for the terminal device by the network device at a time can reduce processing load of the terminal device and the network device.

## Description

### CROSS-REFERENCE TO RELATED APPLICATIONS

This application claims priority to Chinese Patent Application No. 202410142537.5, filed with the China National Intellectual Property Administration on January 31, 2024 and entitled "COMMUNICATION METHOD AND APPARATUS THEREOF", which is incorporated herein by reference in its entirety.

### TECHNICAL FIELD

This application relates to the field of communication technologies, and in particular, to a communication method and an apparatus thereof.

### BACKGROUND

A network device periodically sends synchronization signal and physical broadcast channel blocks (synchronization signal and physical broadcast channel blocks, SSBs) in each cell, so that a terminal device performs initial cell access, cell handover, beam tracking, and the like. To ensure that the terminal device accurately and completely measures all SSBs in a cell, and reduce unnecessary measurement power consumption of the terminal device, the network device configures, for the terminal device in a serving cell of the terminal device, time domain resources for receiving SSBs.

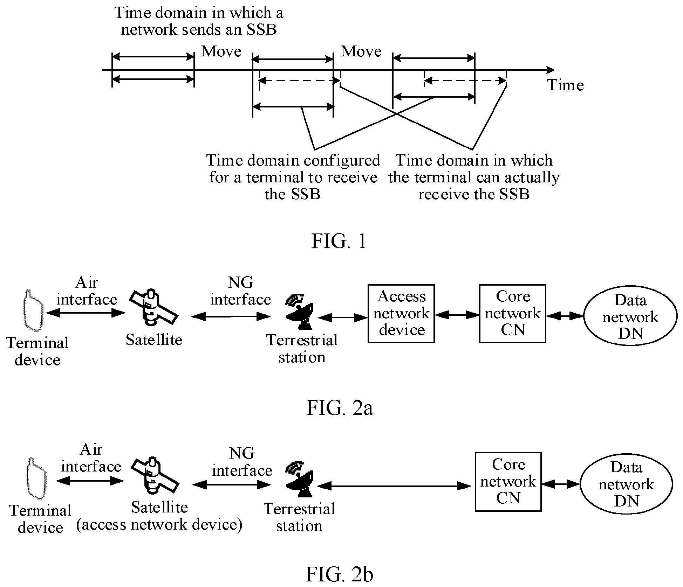

In a non-terrestrial network (non-terrestrial network, NTN), the network device or some functions of the network device are deployed on a high-altitude platform or a satellite. As the high-altitude platform or satellite moves, a distance between the network device and the terminal device changes, and a transmission delay between the network device and the terminal device also changes. In this case, the network device needs to reconfigure, for the terminal device in the serving cell of the terminal device, time domain resources for receiving the SSBs. As shown in FIG. 1, time domain resources on which the network device sends the SSBs in the serving cell are theoretically the same as time domain resources on which the terminal device receives the SSBs. However, as the network device moves (it is assumed that the terminal device does not move), time domain resources on which the terminal device can actually receive the SSBs are offset relative to time domain resources on which the network device sends the SSBs in the serving cell. If the terminal device still receives the SSBs by using the previously configured time domain resources, the terminal device cannot completely receive all SSBs. In addition, the terminal device performs SSB monitoring on time domain resources on which the network device does not send SSBs, causing unnecessary measurement power consumption.

In a scenario in which the network device frequently moves, for example, the network device is deployed on the satellite, due to frequent movement of the satellite, an altitude of the satellite above the ground frequently changes, and the transmission delay between the network device and the terminal device also frequently changes. In this case, the network device needs to frequently configure, for the terminal device in the serving cell of the terminal device, time domain resources for receiving the SSBs.

In a scenario in which the terminal device needs to search for SSBs sent by the network device in a neighboring cell, for example, in a scenario in which the neighboring cell is added as a secondary cell or in a cell handover scenario, the network device also needs to frequently configure, for the terminal device, time domain resources for receiving the SSBs sent by the network device in the neighboring cell, causing heavy processing load of the terminal device and the network device.

### SUMMARY

Embodiments of this application provide a communication method and an apparatus thereof, to reduce processing load of a terminal device and a network device.

According to a first aspect, this application provides a communication method. The method may be performed by a terminal device, may be performed by another device including a function of a terminal device, or may be performed by a chip system (which may alternatively be replaced with a chip) or another functional module. The chip system or the functional module can implement the function of the terminal device. For example, the chip system or the functional module is disposed in the terminal device. An example in which the method is performed by the terminal device is used for description. The terminal device receives, in a first cell, first information from a first network device, where the first information indicates a plurality of pieces of time domain configuration information and a plurality of effective conditions, the plurality of pieces of time domain configuration information are in one-to-one correspondence with the plurality of effective conditions, and the first cell is a serving cell of the terminal device; and when determining that a first effective condition is met, the terminal device receives, in a second cell, a synchronization signal and physical broadcast channel block SSB from a second network device based on first time domain configuration information corresponding to the first effective condition, where the second cell is a neighboring cell of the first cell, the first network device and the second network device are the same or different, the first effective condition belongs to the plurality of effective conditions, and the first time domain configuration information belongs to the plurality of pieces of time domain configuration information.

In this embodiment, a network device configures, for the terminal device at a time, a plurality of pieces of time domain configuration information for measuring the SSB from the neighboring cell and an effective condition corresponding to each piece of time domain configuration information. The terminal device may determine periodically or in real time whether any effective condition is met. When determining that any effective condition is met, the terminal device receives the SSB from the neighboring cell by using time domain configuration information corresponding to the any effective condition. The network device does not need to frequently configure, for the terminal device, the time domain configuration information for measuring the neighboring cell. In comparison with configuring a plurality of pieces of time domain configuration information for the terminal device by the network device at a plurality of times, configuring the plurality of pieces of time domain configuration information for the terminal device by the network device at a time can reduce signaling exchange between the network device and the terminal device, and can reduce processing load of the terminal device and the network device.

In a possible implementation, any effective condition includes one or more of the following: a propagation delay difference PDD condition, a distance condition, a distance difference condition, a time condition, and a receiving condition for an SSB sent by the first network device in the first cell. The PDD is a difference between a first transmission delay and a second transmission delay, where the first transmission delay is a transmission delay between the terminal device and the first network device, the second transmission delay is a transmission delay between the terminal device and the second network device, and the first network device and the second network device are different; or the first transmission delay is a transmission delay between the terminal device and a first satellite corresponding to the first cell, the second transmission delay is a transmission delay between the terminal device and a second satellite corresponding to the second cell, the first network device and the second network device are the same or different, and the first satellite and the second satellite are different. The distance is a distance between the terminal device and a reference point corresponding to the first cell. The distance difference is a difference between a first distance and a second distance, the first distance is a distance between the terminal device and the reference point corresponding to the first cell, and the second distance is a distance between the terminal device and a reference point corresponding to the second cell.

In a possible implementation, the terminal device further receives, in the first cell, second information from the first network device, where the second information indicates SSBs that need to be measured and that respectively correspond to the plurality of pieces of time domain configuration information. The terminal device receives, in the second cell based on the first time domain configuration information corresponding to the first effective condition, an SSB that needs to be measured, corresponds to the first time domain configuration information, and is from the second network device.

In this implementation, the terminal device only needs to search, in a time window configured by using the first time domain configuration information, for the SSBs that need to be measured, and may not search for an SSB that does not need to be measured, so that power consumption of the terminal device can be reduced.

In a possible implementation, the terminal device further sends, in the first cell, third information to the first network device, where the third information indicates the first time domain configuration information.

In this implementation, the first network device learns, based on effective time domain configuration information, that the terminal device performs neighboring cell measurement in a time window of the time domain configuration information, so that the first network device performs proper scheduling in the time window, for example, does not schedule the terminal device in some time periods in the time window.

According to a second aspect, this application provides a communication method. The method may be performed by a first network device, may be performed by another device including a function of a first network device, or may be performed by a chip system (which may alternatively be replaced with a chip) or another functional module. The chip system or the functional module can implement the function of the first network device. For example, the chip system or the functional module is disposed in the first network device. An example in which the method is performed by the first network device is used for description. The first network device generates first information. The first network device sends, in a first cell, the first information to a terminal device, where the first information indicates a plurality of pieces of time domain configuration information and a plurality of effective conditions, the plurality of pieces of time domain configuration information are in one-to-one correspondence with the plurality of effective conditions, the first information is used to: receive, in a second cell by the terminal device when any effective condition is met, a synchronization signal and physical broadcast channel block SSB from a second network device based on any piece of time domain configuration information corresponding to the any effective condition, the first cell is a serving cell of the terminal device, the second cell is a neighboring cell of the first cell, and the first network device and the second network device are the same or different.

In this embodiment, a network device configures, for the terminal device at a time, a plurality of pieces of time domain configuration information for measuring the SSB from the neighboring cell and an effective condition corresponding to each piece of time domain configuration information. The terminal device may determine periodically or in real time whether any effective condition is met. When determining that any effective condition is met, the terminal device receives the SSB from the neighboring cell by using the time domain configuration information corresponding to the any effective condition. The network device does not need to frequently configure, for the terminal device, the time domain configuration information for measuring the neighboring cell. In comparison with configuring a plurality of pieces of time domain configuration information for the terminal device by the network device at a plurality of times, configuring the plurality of pieces of time domain configuration information for the terminal device by the network device at a time can reduce signaling exchange between the network device and the terminal device, and can reduce processing load of the terminal device and the network device.

In a possible implementation, any effective condition includes one or more of the following: a propagation delay difference PDD condition, a distance condition, a distance difference condition, a time condition, and a receiving condition for an SSB sent by the first network device in the first cell. The PDD is a difference between a first transmission delay and a second transmission delay, where the first transmission delay is a transmission delay between the terminal device and the first network device, the second transmission delay is a transmission delay between the terminal device and the second network device, and the first network device and the second network device are different; or the first transmission delay is a transmission delay between the terminal device and a first satellite corresponding to the first cell, the second transmission delay is a transmission delay between the terminal device and a second satellite corresponding to the second cell, the first network device and the second network device are the same or different, and the first satellite and the second satellite are different. The distance is a distance between the terminal device and a reference point corresponding to the first cell. The distance difference is a difference between a first distance and a second distance, the first distance is a distance between the terminal device and the reference point corresponding to the first cell, and the second distance is a distance between the terminal device and a reference point corresponding to the second cell.

In a possible implementation, the first network device further sends, in the first cell, second information to the terminal device, where the second information indicates SSBs that need to be measured and that respectively correspond to the plurality of pieces of time domain configuration information, and the second information is used to: when any effective condition is met, receive, by the terminal device based on any piece of time domain configuration information corresponding to the any effective condition, an SSB that needs to be measured, corresponds to the any piece of time domain configuration information, and is sent by the second network device in the second cell.

In this implementation, the terminal device only needs to search, in a time window configured by using the first time domain configuration information, for the SSBs that need to be measured, and may not search for an SSB that does not need to be measured, so that power consumption of the terminal device can be reduced.

In a possible implementation, the first network device further receives, in the first cell, third information from the terminal device, where the third information indicates time domain configuration information of a met effective condition. The first network device schedules the terminal device based on the time domain configuration information of the met effective condition.

In this implementation, the first network device learns, based on effective time domain configuration information, that the terminal device performs neighboring cell measurement in a time window of the time domain configuration information, so that the first network device performs proper scheduling in the time window, for example, does not schedule the terminal device in some time periods in the time window.

According to a third aspect, this application provides a communication method. The method may be performed by a terminal device, may be performed by another device including a function of a terminal device, or may be performed by a chip system (which may alternatively be replaced with a chip) or another functional module. The chip system or the functional module can implement the function of the terminal device. For example, the chip system or the functional module is disposed in the terminal device. An example in which the method is performed by the terminal device is used for description. The terminal device receives, in a first cell, first information from a first network device, where the first information indicates a plurality of pieces of time domain configuration information and a plurality of identifiers, the plurality of pieces of time domain configuration information are in one-to-one correspondence with the plurality of identifiers, and any piece of time domain configuration information is used by the terminal device to receive a synchronization signal and physical broadcast channel block SSB. The terminal device receives, in the first cell, second information from the first network device, where the second information indicates a first identifier, the first identifier indicates first time domain configuration information, the first identifier belongs to the plurality of identifiers, the first time domain configuration information belongs to the plurality of pieces of time domain configuration information, and the second information is carried in a layer 1 or layer 2 message. The terminal device receives, in a second cell, an SSB from a second network device based on the first time domain configuration information, where the second cell is a neighboring cell of the first cell, and the first network device and the second network device are the same or different.

In this embodiment, the first network device configures, for the terminal device at a time, a plurality of pieces of time domain configuration information and identifiers respectively corresponding to the plurality of pieces of time domain configuration information. Then, the first network device determines effective time domain configuration information in the plurality of pieces of configured time domain configuration information, and indicates, to the terminal device, an identifier corresponding to the effective time domain configuration information. In this way, the terminal device may receive the SSB from the neighboring cell by using the time domain configuration information corresponding to the identifier. Generally, the time domain configuration information is sent to the terminal device by using RRC signaling/higher layer signaling, and the identifier of the effective time domain configuration information is sent to the terminal device by using the layer 1 or layer 2 message. For the terminal device and a network device, processing load of processing the RRC signaling is heavier than that of processing the layer 1 or layer 2 message. Therefore, in comparison with configuring a plurality of pieces of time domain configuration information for the terminal device by the network device at a plurality of times, configuring the plurality of pieces of time domain configuration information for the terminal device by the network device at a time can reduce signaling exchange between the network device and the terminal device, and can reduce processing load of the terminal device and the network device.

In a possible implementation, the terminal device further sends, in the first cell, third information to the first network device, where the third information indicates a first parameter, and the first parameter is used to determine the first time domain configuration information in the plurality of pieces of time domain configuration information.

In this implementation, accuracy of the effective first time domain configuration information determined by the first network device by using the first parameter reported by the terminal device is high.

In a possible implementation, the first parameter specifically includes one or more of the following: a first PDD, where the first PDD is a difference between a first transmission delay and a second transmission delay, where the first transmission delay is a transmission delay between the terminal device and the first network device, the second transmission delay is a transmission delay between the terminal device and the second network device, and the first network device and the second network device are different; or the first transmission delay is a transmission delay between the terminal device and a first satellite corresponding to the first cell, the second transmission delay is a transmission delay between the terminal device and a second satellite corresponding to the second cell, the first network device and the second network device are the same or different, and the first satellite and the second satellite are different; a first distance, where the first distance is a distance between the terminal device and a reference point corresponding to the first cell; a first distance difference, where the first distance difference is a difference between a first distance and a second distance, the first distance is a distance between the terminal device and the reference point corresponding to the first cell, and the second distance is a distance between the terminal device and a reference point corresponding to the second cell; information about receiving, by the terminal device, an SSB sent in the first cell.

In a possible implementation, the terminal device further receives, in the first cell, fourth information from the first network device, where the fourth information indicates SSBs that need to be measured and that respectively correspond to the first time domain configuration information. The terminal device receives, in the second cell based on the first time domain configuration information, an SSB that needs to be measured, corresponds to the first time domain configuration information, and is from the second network device.

In this implementation, the terminal device only needs to search, in a time window configured by using the first time domain configuration information, for the SSBs that need to be measured, and may not search for an SSB that does not need to be measured, so that power consumption of the terminal device can be reduced.

According to a fourth aspect, this application provides a communication method. The method may be performed by a first network device, may be performed by another device including a function of a first network device, or may be performed by a chip system (which may alternatively be replaced with a chip) or another functional module. The chip system or the functional module can implement the function of the first network device. For example, the chip system or the functional module is disposed in the first network device. An example in which the method is performed by the first network device is used for description. The first network device sends, in a first cell, first information to a terminal device, where the first information indicates a plurality of pieces of time domain configuration information and a plurality of identifiers, and the plurality of pieces of time domain configuration information are in one-to-one correspondence with the plurality of identifiers. The first network device sends, in the first cell, second information to the terminal device, where the second information indicates a first identifier, the first identifier indicates first time domain configuration information, the first identifier belongs to the plurality of identifiers, the first time domain configuration information belongs to the plurality of pieces of time domain configuration information, the first time domain configuration information is used by the terminal device to receive a synchronization signal and physical broadcast channel block SSB sent by a second network device in a second cell, the second cell is a neighboring cell of the first cell, the first network device and the second network device are the same or different, and the second information is carried in a layer 1 or layer 2 message.

In this embodiment, the first network device configures, for the terminal device at a time, a plurality of pieces of time domain configuration information and identifiers respectively corresponding to the plurality of pieces of time domain configuration information. Then, the first network device determines effective time domain configuration information in the plurality of pieces of configured time domain configuration information, and indicates, to the terminal device, an identifier corresponding to the effective time domain configuration information. In this way, the terminal device may receive the SSB from the neighboring cell by using the time domain configuration information corresponding to the identifier. Generally, the time domain configuration information is sent to the terminal device by using RRC signaling/higher layer signaling, and the identifier of the effective time domain configuration information is sent to the terminal device by using the layer 1 or layer 2 message. For the terminal device and a network device, processing load of processing the RRC signaling is heavier than that of processing the layer 1 or layer 2 message. Therefore, in comparison with configuring a plurality of pieces of time domain configuration information for the terminal device by the network device at a plurality of times, configuring the plurality of pieces of time domain configuration information for the terminal device by the network device at a time can reduce signaling exchange between the network device and the terminal device, and can reduce processing load of the terminal device and the network device.

In a possible implementation, the first network device further receives, in the first cell, third information from the terminal device, where the third information indicates a first parameter, and the first parameter is used to determine the first time domain configuration information in the plurality of pieces of time domain configuration information.

In this implementation, accuracy of the effective first time domain configuration information determined by the first network device by using the first parameter reported by the terminal device is high.

In a possible implementation, the first parameter specifically includes one or more of the following: a first PDD, where the first PDD is a difference between a first transmission delay and a second transmission delay, where the first transmission delay is a transmission delay between the terminal device and the first network device, the second transmission delay is a transmission delay between the terminal device and the second network device, and the first network device and the second network device are different; or the first transmission delay is a transmission delay between the terminal device and a first satellite corresponding to the first cell, the second transmission delay is a transmission delay between the terminal device and a second satellite corresponding to the second cell, the first network device and the second network device are the same or different, and the first satellite and the second satellite are different; a first distance, where the first distance is a distance between the terminal device and a reference point corresponding to the first cell; a first distance difference, where the first distance difference is a difference between a first distance and a second distance, the first distance is a distance between the terminal device and the reference point corresponding to the first cell, and the second distance is a distance between the terminal device and a reference point corresponding to the second cell; information about receiving, by the terminal device, an SSB sent in the first cell.

In a possible implementation, the first network device further sends, in the first cell, fourth information to the terminal device, where the fourth information indicates an SSB that needs to be measured and that corresponds to the first time domain configuration information, and the fourth information is used by the terminal device to receive, based on the first time domain configuration information, the SSB that needs to be measured, corresponds to the first time domain configuration information, and is sent by the second network device in the second cell.

In this implementation, the terminal device only needs to search, in a time window configured by using the first time domain configuration information, for the SSBs that need to be measured, and may not search for an SSB that does not need to be measured, so that power consumption of the terminal device can be reduced.

According to a fifth aspect, a communication apparatus is provided. The communication apparatus may be the terminal device according to the first aspect or the third aspect. The communication apparatus has a function of the foregoing terminal device. The communication apparatus is, for example, a functional module in the terminal device, for example, a baseband apparatus or a chip system. Alternatively, the communication apparatus may be the first network device according to the second aspect or the fourth aspect. The communication apparatus has a function of the foregoing first network device. The communication apparatus is, for example, a functional module in the first network device, for example, a baseband apparatus or a chip system.

In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In a possible implementation, the communication apparatus further includes a storage unit (sometimes also referred to as a storage module). The processing unit is configured to: be coupled to the storage unit, and execute a program or instructions in the storage unit, to cause the communication apparatus to perform the function of the terminal device according to the first aspect or the third aspect, or perform the function of the first network device according to the second aspect or the fourth aspect.

When the communication apparatus is the terminal device according to the first aspect, at least one of the following plurality of possible implementations is included.

In a possible implementation, the transceiver unit is configured to: receive, in a first cell, first information from the first network device, where the first information indicates a plurality of pieces of time domain configuration information and a plurality of effective conditions, the plurality of pieces of time domain configuration information are in one-to-one correspondence with the plurality of effective conditions, and the first cell is a serving cell of the communication apparatus; and when determining that a first effective condition is met, receive, in a second cell, a synchronization signal and physical broadcast channel block SSB from a second network device based on first time domain configuration information corresponding to the first effective condition, where the second cell is a neighboring cell of the first cell, the first network device and the second network device are the same or different, the first effective condition belongs to the plurality of effective conditions, and the first time domain configuration information belongs to the plurality of pieces of time domain configuration information.

In a possible implementation, the transceiver unit is further configured to receive, in the first cell, second information from the first network device, where the second information indicates SSBs that need to be measured and that respectively correspond to the plurality of pieces of time domain configuration information. When being configured to receive, in the second cell, the SSB from the second network device based on the first time domain configuration information corresponding to the first effective condition, the transceiver unit is specifically configured to receive, in the second cell based on the first time domain configuration information corresponding to the first effective condition, an SSB that needs to be measured, corresponds to the first time domain configuration information, and is from the second network device.

In a possible implementation, the transceiver unit is further configured to send, in the first cell, third information to the first network device, where the third information indicates the first time domain configuration information.

When the communication apparatus is the first network device according to the second aspect, at least one of the following plurality of possible implementations is included.

In a possible implementation, the processing unit is further configured to generate first information. The transceiver unit is configured to send, in a first cell, the first information to the terminal device, where the first information indicates a plurality of pieces of time domain configuration information and a plurality of effective conditions, the plurality of pieces of time domain configuration information are in one-to-one correspondence with the plurality of effective conditions, the first information is used to: receive, in a second cell by the terminal device when any effective condition is met, a synchronization signal and physical broadcast channel block SSB from a second network device based on any piece of time domain configuration information corresponding to the any effective condition, the first cell is a serving cell of the terminal device, the second cell is a neighboring cell of the first cell, and the communication apparatus and the second network device are the same or different.

In a possible implementation, the transceiver unit is further configured to send, in the first cell, second information to the terminal device, where the second information indicates SSBs that need to be measured and that respectively correspond to the plurality of pieces of time domain configuration information, and the second information is used to: when any effective condition is met, receive, by the terminal device based on any piece of time domain configuration information corresponding to the any effective condition, an SSB that needs to be measured, corresponds to the any piece of time domain configuration information, and is sent by the second network device in the second cell.

In a possible implementation, the transceiver unit is further configured to receive, in the first cell, third information from the terminal device, where the third information indicates time domain configuration information of a met effective condition. The processing unit is further configured to schedule the terminal device based on the time domain configuration information of the met effective condition.

When the communication apparatus is the terminal device according to the third aspect, at least one of the following plurality of possible implementations is included.

In a possible implementation, the transceiver unit is configured to: receive, in a first cell, first information from the first network device, where the first information indicates a plurality of pieces of time domain configuration information and a plurality of identifiers, the plurality of pieces of time domain configuration information are in one-to-one correspondence with the plurality of identifiers, and any piece of time domain configuration information is used by the communication apparatus to receive a synchronization signal and physical broadcast channel block SSB; receive, in the first cell, second information from the first network device, where the second information indicates a first identifier, the first identifier indicates first time domain configuration information, the first identifier belongs to the plurality of identifiers, the first time domain configuration information belongs to the plurality of pieces of time domain configuration information, and the second information is carried in a layer 1 or layer 2 message; and receive, in a second cell, an SSB from a second network device based on the first time domain configuration information, where the second cell is a neighboring cell of the first cell, and the first network device and the second network device are the same or different.

In a possible implementation, the transceiver unit is further configured to send, in the first cell, third information to the first network device, where the third information indicates a first parameter, and the first parameter is used to determine the first time domain configuration information in the plurality of pieces of time domain configuration information.

In a possible implementation, the transceiver unit is further configured to receive, in the first cell, fourth information from the first network device, where the fourth information indicates SSBs that need to be measured and that respectively correspond to the first time domain configuration information. When being configured to receive, in the second cell, the SSB from the second network device based on the first time domain configuration information, the transceiver unit is specifically configured to receive, in the second cell based on the first time domain configuration information, an SSB that needs to be measured, corresponds to the first time domain configuration information, and is from the second network device.

When the communication apparatus is the first network device according to the fourth aspect, at least one of the following plurality of possible implementations is included.

In a possible implementation, the transceiver unit is configured to: send, in a first cell, first information to the terminal device, where the first information indicates a plurality of pieces of time domain configuration information and a plurality of identifiers, and the plurality of pieces of time domain configuration information are in one-to-one correspondence with the plurality of identifiers; and send, in the first cell, second information to the terminal device, where the second information indicates a first identifier, the first identifier indicates first time domain configuration information, the first identifier belongs to the plurality of identifiers, the first time domain configuration information belongs to the plurality of pieces of time domain configuration information, the first time domain configuration information is used by the terminal device to receive a synchronization signal and physical broadcast channel block SSB sent by a second network device in a second cell, the second cell is a neighboring cell of the first cell, the communication apparatus and the second network device are the same or different, and the second information is carried in a layer 1 or layer 2 message.

In a possible implementation, the transceiver unit is further configured to receive, in the first cell, third information from the terminal device, where the third information indicates a first parameter, and the first parameter is used to determine the first time domain configuration information in the plurality of pieces of time domain configuration information.

In a possible implementation, the transceiver unit is further configured to send, in the first cell, fourth information to the terminal device, where the fourth information indicates an SSB that needs to be measured and that corresponds to the first time domain configuration information, and the fourth information is used by the terminal device to receive, based on the first time domain configuration information, the SSB that needs to be measured, corresponds to the first time domain configuration information, and is sent by the second network device in the second cell.

According to a sixth aspect, a communication apparatus is provided, including an interface circuit and a processor, and optionally, further including a memory. The memory is configured to store a computer program. The processor is coupled to the memory and the interface circuit. When the processor reads the computer program or the instructions, the communication apparatus is caused to perform the method performed by the terminal device in the first aspect or the third aspect, or perform the method performed by the first network device in the second aspect or the fourth aspect. For example, the interface circuit is configured to: receive a signal from a communication apparatus other than the communication apparatus and transmit the signal to the processor, or send a signal from the processor to a communication apparatus other than the communication apparatus. The processor is configured to implement the method performed by the terminal device in the first aspect or the third aspect, or is configured to implement the method performed by the first network device in the second aspect or the fourth aspect by using a logic circuit or by executing code instructions.

According to a seventh aspect, a communication apparatus is provided, including a processor, and optionally, further including a memory. The processor is coupled to the memory. The memory is configured to store a computer program or instructions. The processor is configured to execute a part or all of the computer program or the instructions in the memory, and when the part or all of the computer program or the instructions are executed, is configured to implement a function of the terminal device in the first aspect or the third aspect, or is configured to implement a function of the first network device in the second aspect or the fourth aspect.

In a possible implementation, the apparatus may further include a transceiver. The transceiver is configured to: send a signal processed by the processor, or receive a signal input into the processor. The transceiver may perform a sending action or a receiving action performed by the terminal device in the first aspect or the third aspect, or is configured to implement the function of the first network device in the second aspect or the fourth aspect.

In a possible implementation, the processing unit in the fifth aspect may be implemented by using the processor, the storage unit in the fifth aspect may be implemented by using the memory, and the transceiver unit in the fifth aspect may be implemented by using the transceiver.

According to an eighth aspect, a communication system is provided, including a terminal device and a first network device. The terminal device is configured to perform the method performed by the terminal device according to the first aspect or the third aspect, and the first network device is configured to perform the method performed by the network device according to the second aspect or the fourth aspect. For example, the terminal device may be implemented by using the communication apparatus according to the fifth aspect, and the first network device may be implemented by using the communication apparatus according to the fifth aspect.

According to a ninth aspect, a computer-readable storage medium is provided. The computer-readable storage medium is configured to store a computer program or instructions, and when the computer program or the instructions are run, the method in the first aspect, the second aspect, the third aspect, or the fourth aspect is implemented.

According to a tenth aspect, a computer program product including instructions is provided. When the computer program product is run on a computer, the method in the first aspect, the second aspect, the third aspect, or the fourth aspect is implemented.

### BRIEF DESCRIPTION OF DRAWINGS

FIG. 1 is a diagram of a time domain resource configuration according to this application;
FIG. 2a, FIG. 2b, FIG. 2c, FIG. 2d, and FIG. 2e each are a diagram of an architecture of a communication system according to this application;
FIG. 3, FIG. 4, FIG. 5, and FIG. 6 each are a schematic flowchart of a communication method according to this application;
FIG. 7 is a diagram of a structure of a communication apparatus according to this application; and
FIG. 8 is a diagram of a structure of a communication apparatus according to this application.

### DESCRIPTION OF EMBODIMENTS

The technical solutions of this application may be applied to a terrestrial network (terrestrial network, TN), or may be applied to a non-terrestrial network (non-terrestrial network, NTN), for example, a satellite network. The technical solutions of this application may be applied to various wireless communication systems, and may be applied to, but is not limited to a 4th generation mobile communication technology (4th generation, 4G) system (also referred to as a long term evolution (long term evolution, LTE) system) and a 5th generation mobile communication technology (5th generation, 5G) system (also referred to as a new radio (new radio, NR) system), or may be applied to a next generation mobile communication system, another similar communication system (for example, a 6th generation mobile communication technology (6th generation, 6G) system), or the like. This is not specifically limited.

In addition, the technical solutions of this application may be applied to a device-to-device (device-to-device, D2D) scenario, for example, an NR-D2D scenario, or may be applied to a V2X scenario, for example, an NR-V2X scenario. The technical solutions of this application may be further applied to fields such as intelligent driving, assisted driving, an intelligent connected vehicle, or a factory manufacturing scenario.

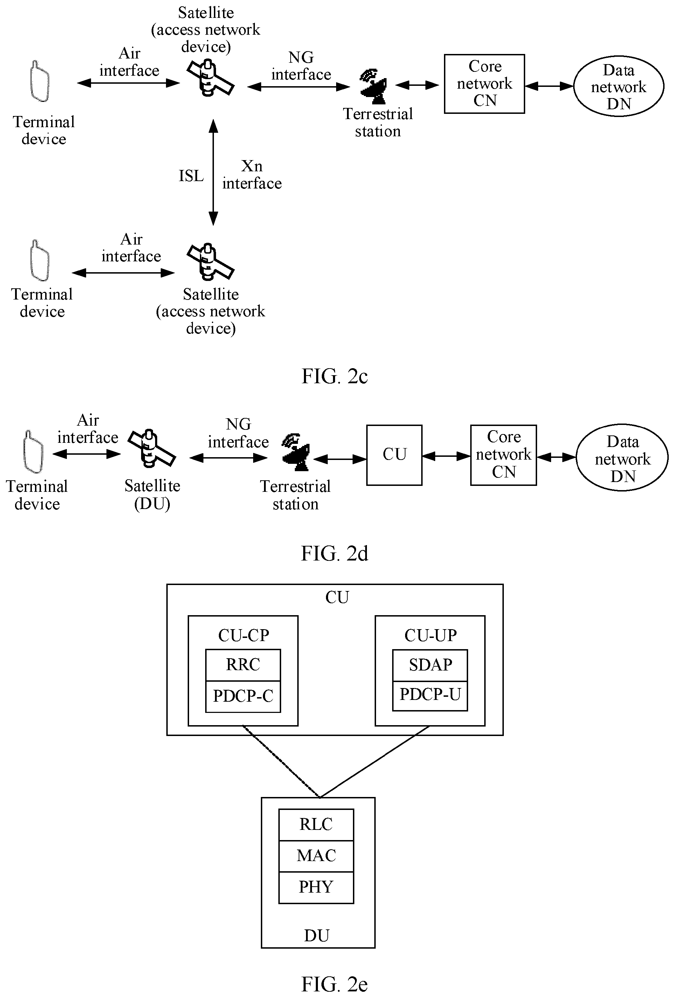

FIG. 2a, FIG. 2b, FIG. 2c, and FIG. 2d are diagrams of architectures of communication systems to which embodiments of this application are applicable. In embodiments of this application, a satellite network is used as an example, but embodiments of this application may be extended to another non-terrestrial network. Satellites are generally divided into two types based on satellite working modes.

One type is a transparent form. The satellite forwards a radio frequency signal between a terminal device and an access network device located on the ground. FIG. 2a shows a transparent satellite architecture (RAN architecture with transparent satellite). A function of the satellite is radio frequency filtering (radio frequency filtering) and frequency conversion and amplification (frequency conversion and amplification). In other words, the satellite is mainly used as a layer 1 relay (L1 relay) to regenerate a physical layer signal, and does not have another higher protocol layer. The terminal device accesses the access network device through an air interface. The satellite and a terrestrial station (the terrestrial station may also be referred to as a non-terrestrial network gateway (NTN gateway)) forward the signal between the terminal device and the access network device located on the ground. The access network device is connected to a core network, and the core network communicates with a data network (data network, DN).

The other type is a regeneration form. The satellite has all or a part of functions of the access network device. In other words, the access network device or a part of functions of the access network device are deployed on the satellite. FIG. 2b shows a regenerated satellite architecture without an inter-satellite link (inter-satellite link, ISL). The satellite has a function of the access network device. FIG. 2c shows a regenerated satellite architecture with an inter-satellite link. The satellite has a function of the access network device. FIG. 2d shows a regenerated satellite architecture having a DU processing function of the access network device. The satellite has a function of a DU in the access network device.

The terminal device accesses the access network device through an air interface. The access network device is deployed on the satellite. The access network device is connected, through a terrestrial station, to a core network deployed on the ground. The core network communicates with a data network DN. The terrestrial station is responsible for forwarding signaling and service data between a satellite access network device and the core network. The access network device communicates with the terrestrial station through an NG interface. Access network devices communicate with each other through an Xn interface. For example, there is an inter-satellite link ISL between satellites, to complete communication between the access network devices.

The following briefly describes functions of a part of network elements in the architecture.

The terminal device (terminal device), which may also be referred to as user equipment (user equipment, UE), is a device having a wireless transceiver function. The terminal device may be deployed on land, where the deployment includes indoor or outdoor, or handheld or vehicle-mounted deployment; may be deployed on water (for example, on a ship); or may be deployed in air (for example, on an airplane, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

A (R)AN device in this application is a device that provides a wireless communication function for the terminal device, and the (R)AN device is also referred to as the access network device. The RAN device in this application includes but is not limited to: a next generation base station (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmission point (transmission point, TP), a mobile switching center, and the like. In systems using different radio access technologies, a device having a function of a base station may be named differently. For example, the device is referred to as a RAN or a gNB (5G NodeB) in a 5th generation (5th generation, 5G) system, referred to as an evolved NodeB (evolved NodeB, eNB or eNodeB) in an LTE system, and referred to as a NodeB (NodeB) in a 3rd generation (3rd generation, 3G) system.

The data network DN may be deployed with a plurality of services, and may provide the terminal device with services such as a data service and/or a voice service. For example, the DN is a private network of a smart factory, a sensor installed in a workshop of the smart factory may be a terminal device, the sensor and a control server are deployed in the DN, and the control server may provide a service for the sensor. The sensor may communicate with the control server, to obtain instructions of the control server, transfer collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

The core network part may include one or more of the following network elements.

An access management network element (which may also be referred to as a mobility management network element) is a control plane network element provided by a carrier network, and is responsible for access control and mobility management for accessing the carrier network by the terminal device, for example, including functions such as mobility status management, temporary mobile subscriber identity allocation, and user authentication. In a 5G communication system, the access management network element may be an access and mobility management function (access and mobility management function, AMF) network element. In a future communication system, the access management network element may still be the AMF network element, or may have another name. This is not limited in this application.

A session management network element is mainly responsible for session management in a mobile network, for example, session establishment, modification, and release. Specific functions are, for example, allocating an IP address to a user, and selecting a user plane network element that provides a packet forwarding function. In the 5G communication system, the session management network element may be a session management function (session management function, SMF) network element. In the future communication system, the session management network element may still be the SMF network element, or may have another name. This is not limited in this application.

A user plane network element is responsible for forwarding and reception of user data in the terminal device. The user plane network element may receive the user data from a data network, and transmit the user data to the terminal device through the access network device. The user plane network element may alternatively receive the user data from the terminal device through the access network device, and forward the user data to the data network. A transmission resource and a scheduling function in the user plane network element that are used to provide a service for the terminal device are managed and controlled by the SMF network element. In the 5G communication system, the user plane network element may be a user plane function (user plane function, UPF) network element. In the future communication system, the user plane network element may still be the UPF network element, or may have another name. This is not limited in this application.

A core network device and the access network device may be different physical devices that are independent of each other, or functions of a core network device and logical functions of the access network device may be integrated into a same physical device, or a part of functions of a core network device and a part of functions of the access network device may be integrated into one physical device.

FIG. 2e is a diagram of an architecture in which a central unit (central unit, CU) is separated from a distributed unit (distributed unit, DU). The CU includes a CU-control plane (control plane, CP) and a CU-user plane (user plane, UP). The CU-CP includes a radio resource control (radio resource control, RRC) layer and a packet data convergence protocol (packet data convergence protocol, PDCP)-C layer. The CU-UP includes a service data adaptation protocol (service data adaptation protocol, SDAP) layer and a PDCP-U layer. The DU includes a radio link control (radio link control, RLC) layer, a medium access control (medium access control, MAC) layer, and a physical (physical, PHY) layer.

Technical terms in this application are described below.
(1) Quasi-earth-fixed cell (quasi-earth-fixed cell) and earth-moving cell (earth-moving cell):

Satellite systems may be classified into a high-earth orbit satellite and medium- and low-earth orbit satellites based on satellite altitudes, in other words, satellite orbit altitudes. The high-earth orbit satellite is also referred to as a geostationary satellite, and the satellite moves at a same speed as the earth rotation system. Therefore, the satellite remains stationary relative to the ground, and correspondingly, a cell of the high-earth orbit satellite is also stationary. Coverage of the cell of the high-earth orbit satellite is large, typically with a cell diameter of 500 km. The medium- and low-earth orbit satellites move fast relative to the ground. Therefore, service coverage areas provided by the medium-earth orbit satellite and the low-earth orbit satellite also move accordingly.

Beams transmitted by a satellite form a cell on the ground, and one cell may be covered by one or more beams of the satellite. For the medium- and low-earth orbit satellites, cells covered by satellite beams may be classified into the following two types:

Quasi-earth-fixed cell (quasi-earth-fixed cell): A moving satellite dynamically adjusts a direction of a beam that forms the cell, so that a location of the cell covered by the satellite beam on the ground remains stationary in a specific time period.

Earth-moving cell (earth-moving cell): A moving satellite does not dynamically adjust a direction of a beam that forms the cell. The cell covered by the satellite beam move with movement of the satellite.

(2) Beam: Beams are classified into an analog beam and a digital beam. The analog beam is generated by using a plurality of phase shifters of an analog filter. Respective phases of the plurality of phase shifters are configured, and signals generated by superposing a plurality of phases have different signal gains in different directions, thereby forming one beam in space. The phase shifter is not required in a digital beam forming process. Instead, digital weighting is performed on a plurality of signals sent by a baseband to an antenna, to form the digital beam.

(3) Radio link monitoring (radio link monitoring, RLM) and radio link recovery:

### (3.1) Radio link monitoring:

A terminal device monitors downlink reference signals of a serving cell, evaluates radio link quality, and indicates in-synchronization or out-of-synchronization to a higher layer.

To improve detection efficiency, a network side configures, for the terminal device, a reference signal set used for RLM. These reference signals may be referred to as explicit reference signals for the RLM, and the reference signals may be channel state information reference signals (channel state information reference signals, CSI-RSs), SSBs, or other reference signals. It should be noted that the CSI-RS or the SSB in this application may alternatively have another name. This is not limited in this application.

If the network side does not configure the reference signal set for the terminal device, but configures, for the terminal device, transmission configuration indication (transmission configuration indication, TCI) states for physical downlink control channel (physical downlink control channel, PDCCH) reception, and these TCI states include one or more CSI-RSs, the terminal device may perform RLM by using one of the CSI-RSs. In other words, the network side implicitly configures reference signals used for radio link monitoring, and the reference signal determined based on the TCI state may be referred to as an implicit reference signal for the RLM. For example, if one activated TCI state corresponding to the PDCCH reception includes only one reference signal, the terminal device performs RLM by using the reference signal. For example, if one activated TCI state corresponding to the PDCCH reception includes two reference signals, and one of the reference signals is set to quasi-co-location (quasi-co-address, QCL)-TypeD, the terminal device performs RLM by using the reference signal that is set to QCL-TypeD (the network side does not set the two reference signals to QCL-TypeD for the terminal device). In addition, the network side notifies that the active TCI state corresponding to the PDCCH reception is to be changed, and accordingly changes the reference signal used for the RLM.

A physical layer of the terminal device periodically evaluates the radio link quality, and compares the radio link quality with Qout and Qin, to determine to send an in-synchronization indication or an out-of-synchronization indication to the higher layer. Qout is defined as a level at which a downlink radio link cannot be reliably received, and corresponds to an in-synchronization block error rate (out-of-sync block error rate, BLERout). Qin is defined as a level at which a downlink radio link can be significantly more reliably received than at Qout, and corresponds to an out-of-synchronization block error rate (in-sync block error rate, BLERin). When radio link quality corresponding to all reference signals used for the RLM is worse than Qout, the physical layer of the terminal device sends the out-of-synchronization indication to the higher layer. When radio link quality corresponding to at least one reference signal used for the RLM is better than Qin, the physical layer of the terminal device sends the in-synchronization indication to the higher layer.

(3.2) Radio link recovery (also referred to as beam failure recovery (beam failure recovery, BFR) or beam failure detection (beam failure detection, BFD)):
The network side configures a CSI-RS resource set for the terminal device to evaluate radio link quality in a link recovery process. CSI-RSs in the CSI-RS resource set are all periodically sent, and the CSI-RS resource set includes a maximum of two RSs.

If the network side does not configure the CSI-RS resource set for the terminal device, the terminal device uses, as a CSI-RS in the CSI-RS resource set, a periodic CSI-RS in an activated TCI state corresponding to the PDCCH reception. If one TCI state includes two RSs, the terminal device uses an RS set to QCL-TypeD as the RS in the CSI-RS resource set. The set includes a maximum of two RSs, and these RSs are all single-port RSs.

The physical layer of the terminal device evaluates the radio link quality based on the RS in the set, and compares the radio link quality with a threshold Qout, LR. The threshold Qout, LR is defined as a level at which downlink radio link quality cannot be used for reliable reception, and corresponds to a bit error rate of a hypothetical PDCCH transmission, which is 10%. When radio link quality evaluated based on all RSs in the set is worse than the threshold Qout, LR, the physical layer of the terminal device sends one piece of beam failure indication information to the higher layer. The physical layer of the terminal device periodically performs the process.

The network side configures another candidate reference signal set for the terminal device to report candidate reference signals in the link recovery process. The set may include a periodic CSI-RS resource set and/or an SSB resource set. When reference signal received power (reference signal received power, RSRP) measurement results of the candidate reference signals in the candidate reference signal resource set are greater than or equal to the threshold Qin, LR, the terminal device provides indexes of the candidate reference signals for the network side.

For a serving cell in which beam failure detection is configured, when a MAC layer of the terminal device receives beam failure indication information of the serving cell from the physical layer, the MAC layer of the terminal device starts or restarts a timer. If a quantity of pieces of beam failure indication information of the serving cell received by the MAC layer of the terminal device is greater than a specified threshold, and if the serving cell is a primary cell (primary cell, PCell) or a primary secondary cell (primary secondary cell, PSCell), the terminal device initiates a random access procedure in the cell; or if the serving cell is a secondary cell (secondary cell, SCell), the terminal device triggers a beam recovery procedure of the SCell. For more details, refer to descriptions in a link recovery procedure (link recovery procedure) in clause 6 in the protocol 38.213.

The terminal device performs radio link monitoring/radio link recovery based on the reference signal set configured by the network device. In a moving cell scenario, due to movement of a satellite, a satellite beam covering a location of a terminal device changes accordingly. The beam is a key to evaluating reference signal quality. When the coverage beam changes, a corresponding reference signal set (a relationship between a reference signal and the beam) also needs to change. Therefore, due to movement of the satellite, the network side needs to frequently update reference signal set configurations for radio link monitoring/radio link recovery. Consequently, there is a large amount of signaling exchange between the network device and the terminal device, causing an increase in processing load of the terminal device and the network device.

(4) SSB-based measurement time sequence (a time sequence may alternatively be replaced with timing) configuration (SSB-based measurement timing configuration, SMTC) information:
The SMTC information may indicate a time window in which the terminal device searches for SSBs, and the SMTC information includes SMTC periodicity information, SMTC duration information, and SMTC offset information. It is defined in a protocol that the SMTC information includes SMTC1 information, and optionally, further includes SMTC2 information. The STMC1 information is for all neighboring cells or all cells corresponding to a measurement frequency. The SMTC2 information is for one or several specific cells, the SMTC2 information includes an identifier of the specific cell, and the SMTC2 is an optional configuration. Not configuring the SMTC2 information is equivalent to that all neighboring cells use the SMTC1 to perform SSB measurement.

An information element carrying the SMTC1 information is an SSB-MTC. The information element SSB-MTC includes two sub-information elements, which respectively carry a periodicity and an offset (periodicityAndOffset), and duration (duration), where the periodicity represents a repetition periodicity of a measurement action (measurement/reception of SSBs) and a start subframe of an SMTC offset measurement action in one periodicity, and the duration represents duration of a measurement action after the measurement action starts.

An information element carrying the SMTC2 information is an SSB-MTC2, and the information element SSB-MTC 2 includes two sub-information elements, which respectively carry a cell identifier list and a periodicity, where the cell identifier list indicates which cells are to be measured by using the SMTC2, and the periodicity represents a repetition periodicity of a measurement action (measurement/reception of SSBs). The terminal device searches for SSBs in these cells in the cell identifier list by using the duration configured in the SMTC1, the periodicity configured in the SMTC2, and the offset configured in the SMTC1.

For more descriptions of the SMTC information, refer to reference signal measurement time sequence configurations (Reference signal measurement timing configurations) described in 5.5.2.10 and radio resource control information elements (Radio resource control information elements) described in 6.3.2 that are in 3GPP TS 38.331 V15.5.1. Details are not described.

In the communication systems in FIG. 2a, FIG. 2b, FIG. 2c, and FIG. 2d, movement of the satellite causes a change in a transmission delay between the access network device and the terminal device. Therefore, a time domain resource for receiving the SSB needs to be reconfigured for the terminal device. As shown in FIG. 1, the time domain resources on which the access network device sends the SSBs are theoretically the same as the time domain resources on which the terminal device receives the SSBs. However, as the satellite moves (it is assumed that the terminal device does not move), the time domain resources on which the terminal device can actually receive the SSBs are offset relative to the time domain resources on which the access network device sends the SSBs. If the terminal device still receives the SSB by using the previously configured time domain resources, the terminal device cannot completely receive all SSBs. In addition, the terminal device performs SSB monitoring on the time domain resources on which the access network device does not send the SSBs, causing unnecessary measurement power consumption.

In a scenario in which the terminal device needs to search for the SSB from the neighboring cell, for example, in a scenario in which the neighboring cell is added as the secondary cell or in a cell handover scenario, a time domain resource for receiving the SSB sent in the neighboring cell needs to be frequently configured for the terminal device. Consequently, there is a large amount of signaling exchange between the network device and the terminal device, causing the processing load of the terminal device and the network device to increase. In addition, the satellite needs to point to the terminal device by using a beam, to configure the time domain resource for the terminal device. However, a coverage area of one beam is limited, and the beam can provide a service only for a terminal device within the coverage area of the beam, and a terminal device in another area cannot be simultaneously scheduled. Consequently, scheduling performance of the network device is affected.

Based on this, embodiments of this application provide a plurality of communication manners, to prevent the network device from frequently configuring, for the terminal device, time domain resource information for receiving the SSB, and reduce the processing load of the terminal device and the network device.

The methods provided in embodiments of this application may all be applied to the network architectures shown in FIG. 2a, FIG. 2b, FIG. 2c, and FIG. 2d or another network architecture. For example, the terminal device in embodiments of this application may be the terminal device in FIG. 2a, FIG. 2b, FIG. 2c, and FIG. 2d, and the network device in embodiments of this application may be the access network device in FIG. 2a, FIG. 2b, FIG. 2c, and FIG. 2d.

To better describe embodiments of this application, the following describes, with reference to the accompanying drawings, the methods provided in embodiments of this application. Unless otherwise specified below, in the accompanying drawings corresponding to embodiments of this application, steps represented by dashed lines are all optional steps.

### Embodiment 1:

A network device configures, for a terminal device at a time, a plurality of pieces of time domain configuration information for measuring an SSB from a neighboring cell and an effective condition corresponding to each piece of time domain configuration information. The terminal device may determine periodically or in real time whether any effective condition is met. When determining that any effective condition is met, the terminal device receives the SSB from the neighboring cell by using time domain configuration information corresponding to the any effective condition. The network device does not need to frequently configure, for the terminal device, the time domain configuration information for measuring the neighboring cell.

In Embodiment 1, that the terminal device receives && from a ** network device in a ## cell may be replaced with that the terminal device receives && from a ## cell of a ** network device. For example, that the terminal device receives, in a first cell, first information from a first network device may be replaced with that the terminal device receives the first information from the first cell of the first network device. For another example, that the terminal device receives, in a second cell, an SSB from a second network device may be replaced with that the terminal device receives the SSB from the second cell of the second network device.

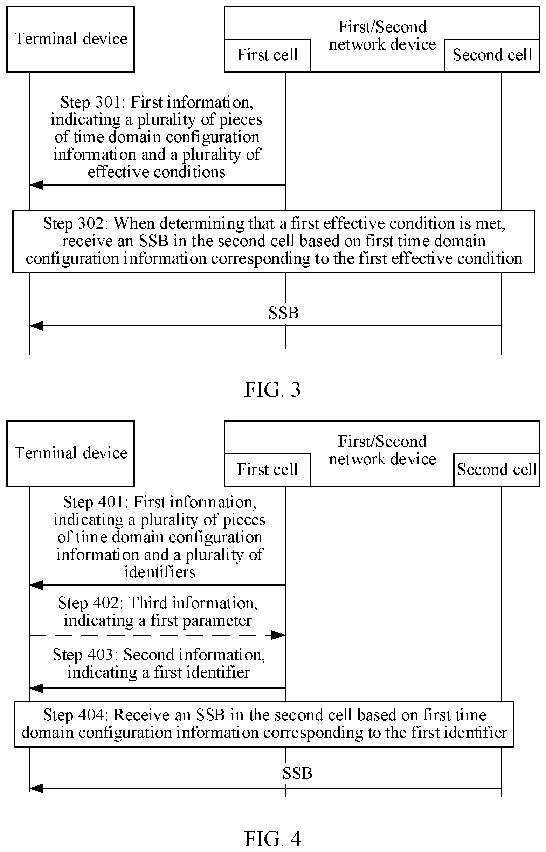

FIG. 3 is a schematic flowchart of a communication method according to an embodiment of this application. The method includes the following steps.

Step 301: A first network device sends first information in a first cell, and correspondingly, a terminal device receives the first information in the first cell. The first information indicates a plurality of pieces of time domain configuration information and a plurality of effective conditions, and the plurality of pieces of time domain configuration information are in one-to-one correspondence with the plurality of effective conditions.

The first cell is a serving cell of the terminal device, and the first network device is a network device currently serving the terminal device.

One piece of time domain configuration information indicates one time window/measurement window/measurement time window. In an example, any piece of time domain configuration information includes a periodicity, duration, and an offset. The periodicity represents a repetition periodicity of receiving an SSB or represents a repetition periodicity of the time window/measurement window/measurement time window, and the periodicity may be at an ms level, a symbol level, a subframe level, or a slot level. For example, the periodicity is 20 ms. The duration represents duration after SSB reception starts or represents a length of the time window/measurement window/measurement time window. The duration may be an integer multiple of the periodicity, or may be irrelevant to duration of the periodicity. The offset represents an interval between a start point at which an SSB is received in one periodicity and a start point of the periodicity. One piece of time domain configuration information may be one piece of SMTC information. One piece of SMTC information includes SMTC1 information, and optionally, further includes SMTC2 information. The STMC1 information is for all cells or all neighboring cells. The SMTC2 information is for one or several specific cells, the SMTC2 information includes an identifier of the specific cell, and the SMTC2 is an optional configuration. Not configuring the SMTC2 information is equivalent to that all neighboring cells use the SMTC1 to perform SSB measurement. For specific content, refer to the foregoing descriptions of the SMTC. Details are not described herein again.

The following describes how the terminal device determines a system frame number (system frame number, SFN) and/or a subframe (subframe) number, corresponding to a current serving cell, of a 1^{st} subframe in the time window/measurement window/measurement time window. For example, SFN mod T = (FLOOR (SMTC offset/10)), where T = CEIL (SMTC periodicity/10), and CEIL () represents rounding up. For example, if the SMTC periodicity exceeds five subframes, subframe = SMTC offset mod 10; or if the SMTC periodicity does not exceed five subframes, subframe = SMTC offset, or subframe = SMTC offset + 5. The periodicity and the offset herein are both expressed in subframes.

The first information may be generated by the first network device. The first information may be referred to as measurement configuration information, and the first information may be carried in an RRC message/RRC signaling, for example, carried in an RRCReconfiguration message/RRCReconfiguration signaling. The first information may further indicate one or more of the following: a measurement object, a report configuration, a measurement ID, a measurement quantity configuration, a measurement gap (GAP) configuration, and the like.

In the scenario in which the CU is separated from the DU shown in FIG. 2e, a CU in the first network device generates the first information, and the CU in the first network device sends the first information to the terminal device via a DU.

The following describes the effective condition corresponding to the time domain configuration information.

Any effective condition includes one or more of the following, and it may be understood that the following sequence numbers (1), (2), ..., and (5) are merely for ease of description, and do not indicate importance degrees and priorities of content corresponding to the sequence numbers.
(1) Propagation delay difference PDD condition: The PDD is a difference between a first transmission delay and a second transmission delay. In a scenario of non-terrestrial deployment of the network device, for example, when the network device is used in the communication systems in FIG. 2b, FIG. 2c, and FIG. 2d, the network device is deployed on a satellite, and the network device moves with movement of the satellite. The first transmission delay is a transmission delay between the terminal device and the first network device, the second transmission delay is a transmission delay between the terminal device and the second network device, and the first network device and the second network device are different. In a scenario of terrestrial deployment of the network device, for example, when the network device is used in the communication system in FIG. 2a, the network device does not move with movement of a satellite, but a transmission delay between the terminal device and the network device changes with the movement of the satellite. The first transmission delay is a transmission delay between the terminal device and a first satellite corresponding to the first cell, the second transmission delay is a transmission delay between the terminal device and a second satellite corresponding to the second cell, the first network device and the second network device are the same or different, and the first satellite and the second satellite are different. The first satellite corresponding to the first cell is a satellite that is responsible for forwarding data and signaling between the terminal device and the first cell, a beam transmitted by the first satellite covers the first cell, the second satellite corresponding to the second cell is a satellite that is responsible for forwarding data and signaling between the terminal device and the second cell, and a beam transmitted by the second satellite covers the second cell.

The PDD condition may be understood as a PDD range. For example, the first information indicates time domain configuration information 1 and time domain configuration information 2, and indicates that a PDD condition in an effective condition of the time domain configuration information 1 is: being less than or equal to a PDD1, and a PDD condition in an effective condition of the time domain configuration information 2 is: being greater than the PDD1. The terminal device determines a first PDD. In a case in which the effective condition does not include a condition other than the PDD condition, when the first PDD is less than or equal to the PDD1, the terminal device determines that the time domain configuration information 1 takes effect; or when the first PDD is greater than the PDD1, the terminal device determines that the time domain configuration information 2 takes effect.

For another example, the first information indicates three pieces of time domain configuration information, and indicates that a PDD condition in an effective condition of time domain configuration information 1 is: being less than or equal to a PDD1, a PDD condition in an effective condition of time domain configuration information 2 is: being greater than the PDD1 and less than a PDD2, and a PDD condition in an effective condition of time domain configuration information 3 is: being greater than the PDD2. The terminal device determines a first PDD. In a case in which the effective condition does not include a condition other than the PDD condition, when the first PDD is less than or equal to the PDD1, the terminal device determines that the time domain configuration information 1 takes effect; when the first PDD is greater than the PDD1 and less than the PDD2, the terminal device determines that the time domain configuration information 2 takes effect; or when the first PDD is greater than the PDD2, the terminal device determines that the time domain configuration information 3 takes effect.

The first network device and the second network device move separately, or the first satellite corresponding to the first cell and the second satellite corresponding to the second cell move separately. A network side may pre-estimate, based on a movement trajectory of the satellite, an association relationship between the propagation delay difference and a time domain resource on which the second network device sends an SSB in the second cell, and then the network side may determine association relationships between different time domain configuration information and PDD conditions, and indicate the association relationships to the terminal device, so that the terminal device receives the SSB from the second cell based on time domain configuration information corresponding to a met PDD condition.

(2) Distance condition: The distance is a distance between the terminal device and a reference point corresponding to the first cell. The reference point is, for example, a center point of a coverage area of the first cell.

The distance condition may be understood as a distance range. For example, the first information indicates the time domain configuration information 1 and the time domain configuration information 2, and indicates that a distance condition in the effective condition of the time domain configuration information 1 is: being less than or equal to d1 or being within a distance range D1, and a PDD condition in the effective condition of the time domain configuration information 2 is: being greater than d1 or being within a distance range D2. The terminal device determines a first distance. In a case in which the effective condition does not include a condition other than the distance condition, when the first distance is less than or equal to d1 or is within the distance range D1, the terminal device determines that the time domain configuration information 1 takes effect; or when the first distance is greater than d1 or is within the distance range D2, the terminal device determines that the time domain configuration information 2 takes effect.

In an earth-moving cell (earth-moving cell) scenario, a location of the first cell changes with the movement of the satellite. In this case, the distance between the terminal device and the reference point corresponding to the first cell also changes with the movement of the satellite. The network side may pre-estimate, based on the movement trajectory of the satellite, an association relationship between the distance between the terminal device and the reference point corresponding to the first cell and the time domain resource on which the second network device sends the SSB in the second cell, and then the network side may determine association relationships between different time domain configuration information and distance conditions, and indicate the association relationships to the terminal device, so that the terminal device receives the SSB from the second cell based on time domain configuration information corresponding to a met distance condition.

In addition, the condition is also applicable to a scenario in which the terminal device moves in an earth-fixed cell.

(3) Distance difference condition: The distance difference is a difference between the first distance and a second distance, the first distance is the distance between the terminal device and the reference point corresponding to the first cell, and the second distance is a distance between the terminal device and a reference point corresponding to the second cell.

The distance difference condition may be understood as a distance difference range. For example, the first information indicates the time domain configuration information 1 and the time domain configuration information 2, and indicates that a distance difference condition in the effective condition of the time domain configuration information 1 is: being less than or equal to s1 or being within a range S1, and a PDD condition in the effective condition of the time domain configuration information 2 is: being greater than s1 or being within a range S2. The terminal device determines a first distance difference. In a case in which the effective condition does not include a condition other than the distance difference condition, when the first distance difference is less than or equal to s1 or is within the range S1, the terminal device determines that the time domain configuration information 1 takes effect; or when the first distance difference is greater than s1 or is within the range S2, the terminal device determines that the time domain configuration information 2 takes effect.

In the earth-moving cell (earth-moving cell) scenario, the location of the first cell and/or a location of the second cell change/changes with the movement of the satellite. In this case, the distance between the terminal device and the reference point corresponding to the first cell may change with the movement of the satellite, and the distance between the terminal device and the reference point corresponding to the second cell may change with the movement of the satellite. Further, the distance difference changes. The network side may pre-estimate, based on the movement trajectory of the satellite, an association relationship between the distance difference and the time domain resource on which the second network device sends the SSB in the second cell, and then the network side may determine association relationships between different time domain configuration information and distance difference conditions, and indicate the association relationships to the terminal device, so that the terminal device receives the SSB from the second cell based on time domain configuration information corresponding to a met distance difference condition.

In addition, the condition is also applicable to the scenario in which the terminal device moves in the earth-fixed cell.

(4) Time condition: The time condition may be understood as a time range or a time point. For example, the first information indicates the time domain configuration information 1, 2, and 3, and the first information indicates that a time condition in the effective condition corresponding to the time domain configuration information 1 is a time point t1 or a time period from t1 to t2, a time condition in the effective condition corresponding to the time domain configuration information 2 is a time point t2 or a time period from t2 to t3, and a time condition in the effective condition corresponding to the time domain configuration information 3 is a time point t3 or a time period from t3 to t4. In a case in which the effective condition does not include a condition other than the time difference condition, the terminal device determines, at the time point t1, that the time domain configuration information 1 takes effect, determines, at the time point t2, that the time domain configuration information 2 takes effect, and determines, at the time point t3, that the time domain configuration information 3 takes effect.

The network side pre-estimates, based on the movement trajectory of the satellite, an association relationship between time information and the time domain resource on which the second network device sends the SSB in the second cell, and then the network side may determine association relationships between different time domain configuration information and time conditions, and indicate the association relationships to the terminal device, so that the terminal device receives the SSB from the second cell based on time domain configuration information corresponding to a met time condition.

(5) Receiving condition for an SSB sent by the first network device in the first cell:

The receiving condition may be understood as an optimal receive beam condition. For example, the first information indicates the time domain configuration information 1 and the time domain configuration information 2, and indicates that an optimal receive beam in the effective condition corresponding to the time domain configuration information 1 is a beam 1, and an optimal receive beam in the effective condition corresponding to the time domain configuration information 2 is a beam 2. In a case in which the effective condition does not include a condition other than the receiving condition, when the terminal device determines that an optimal receive beam for receiving, in the first cell, the SSB from the first network device is the beam 1, the time domain configuration information 1 takes effect; or when the terminal device determines that an optimal receive beam for receiving, in the first cell, the SSB from the first network device is the beam 2, the time domain configuration information 2 takes effect.

In the earth-moving cell (earth-moving cell) scenario, the location of the first cell changes with the movement of the satellite. In this case, an optimal beam used by the terminal device to receive the SSB from the first cell may change with the movement of the satellite. The network side may pre-estimate, based on the movement trajectory of the satellite, an association relationship between the optimal receive beam and the time domain resource on which the second network device sends the SSB in the second cell, and then the network side may determine association relationships between different time domain configuration information and receive beam conditions, and indicate the association relationships to the terminal device, so that the terminal device receives the SSB from the second cell based on time domain configuration information corresponding to a met receive beam condition.

Step 302: When determining that a first effective condition is met, the terminal device receives, in the second cell, the SSB from the second network device based on first time domain configuration information corresponding to the first effective condition.

It may be understood that, if the first effective condition is met, the first time domain configuration information corresponding to the first effective condition takes effect, and the terminal device may receive the SSB based on the effective first time domain configuration information.

Step 302 may be replaced with: When determining that any effective condition is met, the terminal device receives, in the second cell, the SSB from the second network device based on time domain configuration information corresponding to the any effective condition.

The terminal device may determine the effective condition once at an interval of a period of time, or periodically, or in real time. Provided that one effective condition in the plurality of effective conditions is met, the terminal device may receive, in the second cell, the SSB from the second network device based on time domain configuration information corresponding to the one effective condition in the effective conditions.

The second cell is a neighboring cell of the first cell, and the first network device and the second network device are the same or different. For example, in a scenario in which a secondary cell needs to be added for carrier aggregation, the first network device and the second network device are the same, the first cell is a primary cell of the terminal device, and the second cell is a secondary cell of the terminal device. For example, in a scenario in which a secondary node is added, the first network device and the second network device are different, the first network device is a primary node of the terminal device, and the second network device is a secondary node of the terminal device. For another example, in a cell handover scenario, the first network device and the second network device may be the same or may be different.

In the scenario in which the CU is separated from the DU shown in FIG. 2e, the DU in the network device generates an SSB, and sends the SSB.

In comparison with configuring a plurality of pieces of time domain configuration information for the terminal device by the network device at a plurality of times, configuring the plurality of pieces of time domain configuration information for the terminal device by the network device at a time can reduce signaling exchange between the network device and the terminal device, and can reduce processing load of the terminal device and the network device.

Step 302 describes a case in which the terminal device receives, in the second cell, the SSB from the second network device based on the first time domain configuration information. The terminal device may keep searching for an SSB in a time window configured by using the first time domain configuration information. In a possible implementation, the first network device indicates, to the terminal device, an SSB that needs to be measured (SSB-to-measure), and the terminal device only needs to search for, in the time window configured by using the first time domain configuration information, the SSB that needs to be measured, and may not need to search for an SSB that does not need to be measured, thereby reducing power consumption of the terminal device. This example is usually for the moving cell scenario. For example, the first network device sends, in the first cell, second information to the terminal device. Correspondingly, the terminal device receives, in the first cell, the second information from the first network device. The second information indicates SSBs that need to be measured and that respectively correspond to the plurality of pieces of time domain configuration information. Then, the terminal device receives, in the second cell based on the first time domain configuration information, an SSB that needs to be measured, corresponds to the first time domain configuration information, and is from the second network device.

The second network device periodically sends the SSB in the second cell. The second information may indicate an index of an SSB that needs to be measured in one periodicity. In an example, the second information may indicate, in a form of a bitmap, the SSB that needs to be measured. A bit whose value is 1 indicates the index of the SSB that needs to be measured, and a bit whose value is 0 indicates an index of an SSB that does not need to be measured. For example, 00110000 indicates that SSBs whose indexes are 2 and 3 need to be measured.

The SSB that needs to be measured is associated with time domain configuration information. When the time domain configuration information takes effect, the SSB that needs to be measured also takes effect. Alternatively, an independent effective condition is configured for the SSB that needs to be measured, and the SSB that needs to be measured takes effect only when the independent effective condition is met.

There are the following several possible correspondences between the SSB that needs to be measured and time domain configuration information. In a possible correspondence, SSBs that need to be measured and that correspond to all time domain configuration information are the same. For example, the second network device periodically sends the SSB in the second cell, and sends, in one periodicity, 32 SSBs whose indexes are respectively 0 to 31. SSBs that need to be measured and that correspond to three pieces of time domain configuration information all are SSBs whose indexes are 10 to 20. In another possible correspondence, SSBs that need to be measured and that correspond to some pieces of time domain configuration information are the same. For example, SSBs that need to be measured and that correspond to two of three pieces of time domain configuration information are the same, and an SSB that needs to be measured and that corresponds to the remaining one of the three pieces of time domain configuration information and the SSBs corresponding to the two pieces of time domain configuration information are partially different or completely different. For example, the second network device periodically sends the SSB in the second cell, and sends, in one periodicity, 32 SSBs whose indexes are respectively 0 to 31. SSBs that need to be measured and that correspond to time domain configuration information 1 and 3 both are SSBs 10 to 20, and SSBs that need to be measured and that correspond to time domain configuration information 2 are SSBs 15 to 25. In still another possible correspondence, SSBs that need to be measured and that correspond to all time domain configuration information are partially different or completely different. For example, the second network device periodically sends the SSB in the second cell, and sends, in one periodicity, 32 SSBs whose indexes are respectively 0 to 31. SSBs that need to be measured and that correspond to time domain configuration information 1 are SSBs 10 to 20, SSBs that need to be measured and that correspond to time domain configuration information 2 are SSBs 15 to 25, and SSBs that need to be measured and that correspond to time domain configuration information 1 are SSBs 20 to 30.

In the scenario in which the CU is separated from the DU shown in FIG. 2e, the CU in the first network device generates the second information, and the CU sends the second information to the terminal device via the DU.

In a possible implementation, the terminal device notifies the first network device of effective time domain configuration information. For example, when the first effective condition is met, the terminal device sends third information to the first network device in the first cell. Correspondingly, the first network device receives the third information in the first cell. The third information indicates the first time domain configuration information. The third information indicates a first identifier of the first time domain configuration information. For example, in step 301, the first information further indicates identifiers respectively corresponding to the plurality of pieces of time domain configuration information. In this case, the third information may indicate an identifier of the effective time domain configuration information, and the identifier is, for example, an index. Alternatively, the third information may indicate a met effective condition. For example, for the propagation delay difference PDD condition, the third information may indicate the difference between the first transmission delay and the second transmission delay. For the distance condition, the third information may indicate the distance between the terminal device and the reference point corresponding to the first cell. For the distance difference condition, the third information may indicate the difference between the first distance and the second distance. For the receiving condition for the SSB, the third information may indicate the optimal receive beam of the terminal device. The terminal device notifies the first network device of the effective time domain configuration information, so that the first network device can properly schedule the terminal device. For example, the first network device learns, based on the effective time domain configuration information, that the terminal device performs neighboring cell measurement in a time window of the time domain configuration information, so that the first network device performs proper scheduling in the time window, for example, does not schedule the terminal device in some time periods in the time window.

The third information may be sent to the first network device by using an RRC message. In the scenario in which the CU is separated from the DU shown in FIG. 2e, the third information may be sent to the CU in the first network device by using the RRC message. After parsing the third information, the CU notifies the DU of specific content of the effective time domain configuration information. The DU properly schedules the terminal device based on the specific content of the effective time domain configuration information.

The third information may be sent to the first network device by using an L1/L2 message. In the scenario in which the CU is separated from the DU shown in FIG. 2e, the third information may be sent to the DU in the first network device by using the L1/L2 message. After parsing the third information, the DU properly schedules the terminal device based on the specific content of the effective time domain configuration information. For example, the third information indicates the identifier of the effective time domain configuration information. The CU has previously notified the DU of the plurality of pieces of time domain configuration information and the corresponding identifiers, and the DU may find the corresponding effective time domain configuration information based on the identifier indicated by the third information.

The foregoing step 302 describes a case in which when determining that the first effective condition is met, the terminal device receives, in the second cell, the SSB from the second network device based on the first time domain configuration information corresponding to the first effective condition. In an example, in a scenario in which the terminal device sends the third information to the first network device, the terminal device may not need to consider a sequence of receiving, in the second cell, the SSB from the second network device based on the first time domain configuration information and sending the third information. In another example, after determining that the first effective condition is met and successfully sending the third information, the terminal device receives, in the second cell, the SSB from the second network device based on the first time domain configuration information corresponding to the first effective condition.

In addition, even if the terminal device does not notify the first network device of the effective time domain configuration information, the first network device may infer time domain configuration information that takes effect at different moments or in different time periods. The first network device learns, based on the effective time domain configuration information, that the terminal device performs neighboring cell measurement in the time window of the time domain configuration information, so that the first network device performs proper scheduling in the time window, for example, does not schedule the terminal device in some time periods in the time window.

Embodiment 2: A network device configures, for a terminal device at a time, a plurality of pieces of time domain configuration information and identifiers respectively corresponding to the plurality of pieces of time domain configuration information. Then, the network device determines effective time domain configuration information in the plurality of pieces of configured time domain configuration information, and indicates, to the terminal device, an identifier corresponding to the effective time domain configuration information. In this way, the terminal device may receive an SSB from a neighboring cell by using the time domain configuration information corresponding to the identifier.

FIG. 4 is a schematic flowchart of a communication method according to an embodiment of this application. The method includes the following steps.

Step 401: A first network device sends, in a first cell, first information to a terminal device, and correspondingly, the terminal device receives the first information in the first cell. The first information indicates a plurality of pieces of time domain configuration information and a plurality of identifiers, and the plurality of pieces of time domain configuration information are in one-to-one correspondence with the plurality of identifiers.

The first cell is a serving cell of the terminal device, and the first network device is a network device currently serving the terminal device.

The first information may indicate the plurality of identifiers in an explicit manner, or may indicate the plurality of identifiers in an implicit manner. In the implicit manner, for example, the identifiers of the plurality of pieces of time domain configuration information are implicitly indicated through ranking of the plurality of pieces of time domain configuration information. For example, an identifier of time domain configuration information that ranks first is an index 0.

For related content of indicating the plurality of pieces of time domain configuration information in step 401, refer to descriptions in step 301. A difference from step 301 lies in that the first information in step 401 does not indicate an effective condition.

The identifier of the time domain configuration information may be an index of the time domain configuration information.

The first information may be generated by the first network device. The first information may be referred to as measurement configuration information, and the first information may be carried in an RRC message/RRC signaling, for example, carried in an RRCReconfiguration message/RRCReconfiguration signaling. The first information may further indicate one or more of the following: a measurement object, a report configuration, a measurement ID, a measurement quantity configuration, a measurement gap (GAP) configuration, and the like.

In the scenario in which the CU is separated from the DU shown in FIG. 2e, a CU in the first network device generates the first information, and that the first network device sends the first information to the terminal device in step 301 may be that the CU in the first network device sends the first information to the terminal device via a DU.

Optionally, step 402: The terminal device sends, in the first cell, third information to the first network device, and correspondingly, the first network device receives the third information in the first cell. The third information indicates a first parameter, and the first parameter is used to determine first time domain configuration information in the plurality of pieces of time domain configuration information.

The third information indicates the first parameter, and includes one or more of the following. It may be understood that the following sequence numbers (1), (2), ..., and (5) are merely for ease of description, and do not indicate importance degrees and priorities of content corresponding to the sequence numbers.
(1) The third information indicates location information of the terminal device, for example, GPS location information. The first network device and a second network device move separately, or a first satellite corresponding to the first cell and a second satellite corresponding to a second cell move separately. A network side may pre-estimate, based on a movement trajectory of a satellite, an association relationship between the location information of the terminal device, location information of the first cell, location information of the second cell, and a time domain resource on which the second network device sends an SSB in the second cell; and after the terminal device reports the location information of the terminal device to the first network device, the first network device may determine effective time domain configuration information based on the location information of the terminal device, and indicate the effective time domain configuration information to the terminal device, so that the terminal device receives the SSB from the second cell based on the indicated time domain configuration information.
(2) The third information indicates a first PDD, where the first PDD is a difference between a first transmission delay and a second transmission delay. In a scenario of non-terrestrial deployment of the network device, for example, when the network device is used in the communication systems in FIG. 2b, FIG. 2c, and FIG. 2d, the network device is deployed on a satellite, and the network device moves with movement of the satellite. The first transmission delay is a transmission delay between the terminal device and the first network device, the second transmission delay is a transmission delay between the terminal device and the second network device, and the first network device and the second network device are different. In a scenario of terrestrial deployment of the network device, for example, when the network device is used in the communication system in FIG. 2a, the network device does not move with movement of a satellite, but a transmission delay between the terminal device and the network device changes with the movement of the satellite. The first transmission delay is a transmission delay between the terminal device and a first satellite corresponding to the first cell, the second transmission delay is a transmission delay between the terminal device and a second satellite corresponding to the second cell, the first network device and the second network device are the same or different, and the first satellite and the second satellite are different. The satellite corresponding to the first cell is a satellite that is responsible for forwarding data and signaling between the terminal device and the first cell, a beam transmitted by the first satellite covers the first cell, the satellite corresponding to the second cell is a satellite that is responsible for forwarding data and signaling between the terminal device and the second cell, and a beam transmitted by the second satellite covers the second cell. The first network device and the second network device move separately, or the first satellite corresponding to the first cell and the second satellite corresponding to the second cell move separately. The network side may pre-estimate, based on the movement trajectory of the satellite, an association relationship between PDD information and the time domain resource on which the second network device sends the SSB in the second cell; and after the terminal device reports the PDD information to the first network device, the first network device may determine effective time domain configuration information based on the PDD information, and indicate the effective time domain configuration information to the terminal device, so that the terminal device receives the SSB from the second cell based on the indicated time domain configuration information.
(3) The third information indicates a first distance, where the first distance is a distance between the terminal device and a reference point corresponding to the first cell. In an earth-moving cell (earth-moving cell) scenario, a location of the first cell changes with the movement of the satellite. In this case, the distance between the terminal device and the reference point corresponding to the first cell also changes with the movement of the satellite. The network side may pre-estimate, based on the movement trajectory of the satellite, an association relationship between the distance between the terminal device and the reference point corresponding to the first cell and the time domain resource on which the second network device sends the SSB in the second cell; and after the terminal device reports, to the first network device, distance information between the terminal device and the reference point corresponding to the first cell, the first network device may determine effective time domain configuration information based on the distance information, and indicate the effective time domain configuration information to the terminal device, so that the terminal device receives the SSB from the second cell based on the indicated time domain configuration information. In addition, this example is also applicable to a scenario in which the terminal device moves in an earth-fixed cell.
(4) The third information indicates a first distance difference. The first distance difference is a difference between the first distance and a second distance, the first distance is the distance between the terminal device and the reference point corresponding to the first cell, and the second distance is a distance between the terminal device and a reference point corresponding to the second cell. In the earth-moving cell (earth-moving cell) scenario, the location of the first cell and/or a location of the second cell change/changes with the movement of the satellite. In this case, the distance between the terminal device and the reference point corresponding to the first cell may change with the movement of the satellite, and the distance between the terminal device and the reference point corresponding to the second cell may change with the movement of the satellite. Further, the distance difference changes. The network side may pre-estimate, based on the movement trajectory of the satellite, an association relationship between distance difference information and the time domain resource on which the second network device sends the SSB in the second cell; and after the terminal device reports the distance difference information to the first network device, the first network device may determine effective time domain configuration information based on the distance difference information, and indicate the effective time domain configuration information to the terminal device, so that the terminal device receives the SSB from the second cell based on the indicated time domain configuration information. In addition, this example is also applicable to the scenario in which the terminal device moves in the earth-fixed cell.
(5) The third information indicates information about receiving, by the terminal device, an SSB sent in the first cell. The information about the reception may be understood as information about an optimal receive beam. In the earth-moving cell (earth-moving cell) scenario, the location of the first cell changes with the movement of the satellite. In this case, an optimal beam used by the terminal device to receive the SSB from the first cell may change with the movement of the satellite. The network side may pre-estimate, based on the movement trajectory of the satellite, an association relationship between optimal receive beam information and the time domain resource on which the second network device sends the SSB in the second cell; and after the terminal device reports the optimal receive beam information to the first network device, the first network device may determine effective time domain configuration information based on the optimal receive beam information, and indicate the effective time domain configuration information to the terminal device, so that the terminal device receives the SSB from the second cell based on the indicated time domain configuration information.

Step 403: The first network device sends, in the first cell, second information to the terminal device, and correspondingly, the terminal device receives, in the first cell, the second information from the first network device. The second information indicates a first identifier, the first identifier is an identifier corresponding to the first time domain configuration information, and the second information is carried in a layer 1 or layer 2 message.

The first network device may determine the effective first time domain configuration information based on time information. Alternatively, the first network device may determine, based on the first parameter indicated by the third information, the effective first time domain configuration information in the plurality of pieces of time domain configuration information indicated by the first information, and indicate the effective first time domain configuration information to the terminal device. Accuracy of the effective first time domain configuration information determined based on the first parameter reported by the terminal device is high.

The second information may indicate the first identifier, that is, the effective time domain configuration information, by using a value of a bit. For example, the first information indicates three pieces of time domain configuration information, and the second information occupies at least two bits. For example, the first information indicates five pieces of time domain configuration information, and the second information occupies at least three bits. An example in which two bits are occupied is used for description. 00 represents an identifier corresponding to time domain configuration information 1, 01 represents an identifier corresponding to time domain configuration information 2, and 10 represents an identifier corresponding to time domain configuration information 3. For another example, the second information indicates the first identifier, that is, the effective time domain configuration information, in a form of a bitmap. Time domain configuration information corresponding to a bit whose value is 1 is the effective time domain configuration information. For example, the first information indicates three pieces of time domain configuration information, and a bitmap of the second information is 001, indicating an identifier corresponding to time domain configuration information 3.

The terminal device may send the third information to the first network device by using an RRC message or an L1/L2 message, and the first network device may send the second information to the terminal device by using the L1/L2 message. For example, the second information is carried on a downlink physical control channel, or the second information is carried in a MAC layer control element. For example, in the scenario in which the CU is separated from the DU shown in FIG. 2e, the third information may be sent to the CU in the first network device. After parsing the third information, the CU determines the effective time domain configuration information, and notifies the DU of an identifier of the effective time domain configuration information. The CU sends the second information to the terminal device. For another example, in the scenario in which the CU is separated from the DU shown in FIG. 2e, the second information may be sent to the DU in the first network device, the CU in the first network device sends the first information to the DU in the first network device, and the DU in the first network device determines the second information based on the first information, and sends the second information to the terminal device.

Step 404: The terminal device receives, in the second cell, the SSB from the second network device based on the first time domain configuration information corresponding to the first identifier.

The second cell is a neighboring cell of the first cell, and the first network device and the second network device are the same or different. For example, in a scenario in which a secondary cell needs to be added for carrier aggregation, the first network device and the second network device are the same, the first cell is a primary cell of the terminal device, and the second cell is a secondary cell of the terminal device. For example, in a scenario in which a secondary node is added, the first network device and the second network device are different, the first network device is a primary node of the terminal device, and the second network device is a secondary node of the terminal device. For another example, in a cell handover scenario, the first network device and the second network device may be the same or may be different.

In the scenario in which the CU is separated from the DU shown in FIG. 2e, the DU in the network device generates an SSB, and sends the SSB.

Step 404 describes a case in which the terminal device receives, in the second cell, the SSB from the second network device based on the first time domain configuration information. The terminal device may keep searching for an SSB in a time window configured by using the first time domain configuration information. In a possible implementation, the first network device indicates, to the terminal device, an SSB that needs to be measured (SSB-to-measure) based on the first time domain configuration information, and the terminal device only needs to search for, in the time window configured by using the first time domain configuration information, the SSB that needs to be measured, and may not need to search for an SSB that does not need to be measured, thereby reducing power consumption of the terminal device. This example is usually for the moving cell scenario. For example, the first network device sends, in the first cell, fifth information to the terminal device. Correspondingly, the terminal device receives, in the first cell, the fifth information from the first network device. The fifth information indicates the SSB that needs to be measured and that corresponds to the first time domain configuration information. Then, the terminal device receives, in the second cell based on the first time domain configuration information, the SSB that needs to be measured, corresponds to the first time domain configuration information, and is from the second network device.

The second network device periodically sends the SSB in the second cell. The fifth information may indicate an index of an SSB that needs to be measured in one periodicity. In an example, the fifth information may indicate, in a form of a bitmap, the SSB that needs to be measured. A bit whose value is 1 indicates an index of the SSB that needs to be measured, and a bit whose value is 0 indicates an index of an SSB that does not need to be measured. For example, 00110000 indicates that SSBs whose indexes are 2 and 3 need to be measured.

The SSB that needs to be measured is associated with time domain configuration information. When the time domain configuration information takes effect, the SSB that needs to be measured also takes effect. Alternatively, an independent effective condition is configured for the SSB that needs to be measured, and the SSB that needs to be measured takes effect only when the independent effective condition is met.

There are the following several possible correspondences between the SSB that needs to be measured and the time domain configuration information. In a possible correspondence, SSBs that need to be measured and that correspond to all time domain configuration information are the same. In another possible correspondence, SSBs that need to be measured and that correspond to some pieces of time domain configuration information are the same. For example, SSBs that need to be measured and that correspond to two of three pieces of time domain configuration information are the same, and an SSB that needs to be measured and that corresponds to the remaining one of the three pieces of time domain configuration information and the SSBs corresponding to the two pieces of time domain configuration information are partially different or completely different. In still another possible correspondence, SSBs that need to be measured and that correspond to all time domain configuration information are partially different or completely different.

Generally, the time domain configuration information is sent to the terminal device by using RRC signaling/higher layer signaling, and the identifier of the effective time domain configuration information is sent to the terminal device by using a layer 1 or layer 2 message. For the terminal device and the network device, processing load of processing the RRC signaling is heavier than that of processing the layer 1 or layer 2 message. Therefore, in comparison with configuring a plurality of pieces of time domain configuration information for the terminal device by the network device at a plurality of times, configuring the plurality of pieces of time domain configuration information for the terminal device by the network device at a time can reduce signaling exchange between the network device and the terminal device, and can reduce processing load of the terminal device and the network device.

### Embodiment 3:

A network device configures a plurality of reference signal sets and an effective condition corresponding to each reference signal set for a terminal device at a time. The terminal device may determine whether any effective condition is met. When determining that any effective condition is met, the terminal device performs radio link monitoring and/or radio link recovery by using a reference signal set corresponding to the any effective condition. The network device does not need to frequently configure the reference signal sets for the terminal device.

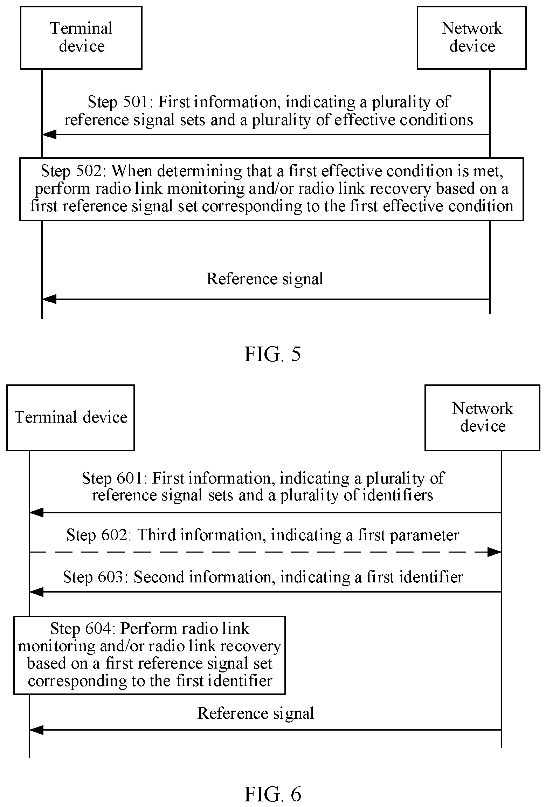

FIG. 5 is a schematic flowchart of a communication method according to an embodiment of this application. The method includes the following steps.

Step 501: The network device sends first information, and correspondingly, the terminal device receives the first information. The first information indicates a plurality of reference signal sets and a plurality of effective conditions, and the plurality of reference signal sets are in one-to-one correspondence with the plurality of effective conditions.

The network device sends a reference signal to the terminal device in a form of a beam. For a plurality of reference signals in the reference signal set, different reference signals are usually sent by using different beams. Reference signals in different reference signal sets are partially different or completely different.

The first information may be carried in an RRC message/RRC signaling, for example, carried in an RRCReconfiguration message/RRCReconfiguration signaling.

The reference signal may be a CSI-RS or an SSB.

In the scenario in which the CU is separated from the DU shown in FIG. 2e, the DU in the network device generates the first information. That the network device sends the first information to the terminal device in step 501 may be replaced with that the DU in the network device generates the first information, the DU in the network device sends the first information to the CU in the network device, and then the CU in the network device sends the first information to the terminal device. For example, the first information is carried in the RRC signaling.

Step 502: When determining that a first effective condition is met, the terminal device performs radio link monitoring and/or radio link recovery based on a first reference signal set corresponding to the first effective condition.

The first effective condition belongs to the plurality of effective conditions, and the first reference signal set belongs to the plurality of reference signal sets.

Related content of performing radio link monitoring and/or radio link recovery based on the reference signal in the reference signal set may be described above, and details are not described herein again. In the scenario in which the CU is separated from the DU shown in FIG. 2e, the DU in the network device generates the reference signal, and sends the reference signal.

The following describes an effective condition corresponding to time domain configuration information.

Any effective condition includes one or more of the following, and it may be understood that the following sequence numbers (1), (2), and (3) are merely for ease of description, and do not indicate importance degrees and priorities of content corresponding to the sequence numbers.
(1) Distance condition: The distance is a distance between the terminal device and a reference point corresponding to a serving cell. The reference point is, for example, a center point of a coverage area of the serving cell.

The distance condition may be understood as a distance range. For example, the first information indicates a reference signal set 1 and a reference signal set 2, and indicates that a distance condition in an effective condition of the reference signal set 1 is: being less than or equal to d1 or being within a distance range D1, and a PDD condition in an effective condition of the reference signal set 2 is: being greater than d1 or being within a distance range D2. The terminal device determines a first distance. In a case in which the effective condition does not include a condition other than the distance condition, when the first distance is less than or equal to d1 or is within the distance range D1, the terminal device determines that the reference signal set 1 takes effect; or when the first distance is greater than d1 or is within the distance range D2, the terminal device determines that the reference signal set 2 takes effect.

In an earth-moving cell (earth-moving cell) scenario, a location of the serving cell changes with movement of a satellite. In this case, the distance between the terminal device and the reference point corresponding to the serving cell also changes with the movement of the satellite. The network side may pre-estimate, based on a movement trajectory of the satellite, an association relationship between the distance between the terminal device and the reference point corresponding to the serving cell and the beam of the reference signal, and then the network side may determine association relationships between different reference signal sets and distance conditions, and indicate the association relationships to the terminal device, so that the terminal device performs radio link monitoring and/or radio link recovery based on a reference signal set corresponding to a met distance condition.

In addition, the condition is also applicable to a scenario in which the terminal device moves in an earth-fixed cell.

(2) Area location condition: The area location is an area location in which the terminal device is located. For example, the first information indicates the reference signal set 1 and the reference signal set 2, and indicates that an area location condition in the effective condition of the reference signal set 1 is an area location 1, and an area location condition in the effective condition of the reference signal set 2 is an area location 2. In a case in which the effective condition does not include a condition other than the area location condition, when determining that the terminal device is located in the area location 1, the terminal device determines that the reference signal set 1 takes effect; or when determining that the terminal device is located in the area location 2, the terminal device determines that the reference signal set 2 takes effect.

When the network device moves, the network side may pre-estimate, based on the movement trajectory of the satellite, an association relationship between the area location of the terminal device and the beam of the reference signal, and then the network side may determine association relationships between different reference signal sets and area location conditions, and indicate the association relationships to the terminal device, so that the terminal device performs radio link monitoring and/or radio link recovery based on a reference signal set corresponding to a met area location condition. When an effective reference signal set is determined based on the area location of the terminal device, reference may be further made to a location of the satellite.

(3) Time condition: The time condition may be understood as a time range or a time point. For example, the first information indicates reference signal sets 1, 2, and 3, the first information indicates that a time condition in the effective condition corresponding to the reference signal set 1 is a time point t1 or a time period from t1 to t2, a time condition in the effective condition corresponding to the reference signal set 2 is a time point t2 or a time period from t2 to t3, and a time condition in an effective condition corresponding to the reference signal set 3 is a time point t3 or a time period from t3 to t4. In a case in which the effective condition does not include a condition other than a time difference condition, the terminal device determines, at the time point t1, that the reference signal set 1 takes effect, determines, at the time point t2, that the reference signal set 2 takes effect, and determines, at the time point t3, that the reference signal set 3 takes effect.

The network side may pre-estimate, based on the movement trajectory of the satellite, an association relationship between time information and the beam associated with the reference signal, and then the network side may determine association relationships between different reference signal sets and time conditions, and indicate the association relationships to the terminal device, so that the terminal device performs radio link monitoring and/or radio link recovery based on a reference signal set corresponding to a met time condition.

(5) Receiving condition for an SSB sent by the network device.

The receiving condition may be understood as an optimal receive beam condition. For example, the first information indicates the reference signal set 1 and the reference signal set 2, and indicates that an optimal receive beam in the effective condition corresponding to the reference signal set 1 is a beam 1, and an optimal receive beam in the effective condition corresponding to the reference signal set 2 is a beam 2. In a case in which the effective condition does not include a condition other than the receiving condition, when the terminal device determines that an optimal receive beam for receiving, in a first cell, the SSB from the network device is the beam 1, the reference signal set 1 takes effect; or when the terminal device determines that an optimal receive beam for receiving, in a first cell, the SSB from the network device is the beam 2, the reference signal set 2 takes effect.

In the earth-moving cell (earth-moving cell) scenario, a location of the first cell changes with the movement of the satellite. In this case, the optimal beam used by the terminal device to receive the SSB from the first cell may change with the movement of the satellite. The network side may pre-estimate, based on the movement trajectory of the satellite, an association relationship between the optimal receive beam and the transmit beam of the reference signal, and then the network side may determine association relationships between different reference signal sets and receive beam conditions, and indicate the association relationships to the terminal device, so that the terminal device performs radio link monitoring and/or radio link recovery based on a reference signal set corresponding to a met receive beam condition.

In a possible implementation, the terminal device notifies the network device of an effective reference signal set. For example, when the first effective condition is met, the terminal device sends second information to the network device. Correspondingly, the network device receives the second information. The second information indicates a first reference signal set. The second information indicates a first identifier of the first reference signal set. For example, in step 501, the first information further indicates identifiers respectively corresponding to the plurality of reference signal sets. In this case, the second information may indicate an identifier of the effective reference signal set, and the identifier is, for example, an index. Alternatively, the second information may indicate a met effective condition. For example, for the distance condition, the second information may indicate the distance between the terminal device and the reference point corresponding to the serving cell. For the area location condition, the second information may indicate the area location in which the terminal device is located. For the receiving condition for the SSB, the second information may indicate the optimal receive beam of the terminal device. The terminal device notifies the network device of the effective reference signal set, so that the network device can learn of specific reference signals that currently need to be sent for the terminal device to measure.

The second information may be sent to the network device by using an RRC message. In the scenario in which the CU is separated from the DU shown in FIG. 2e, the second information may be sent to the CU in the network device by using an RRC message. After parsing the second information, the CU notifies the DU of specific content of the effective reference signal set. The DU learns of, based on the specific content of the effective reference signal set, the specific reference signals that need to be sent to the terminal device.

The second information may be sent to the network device by using an L1/L2 message. In the scenario in which the CU is separated from the DU shown in FIG. 2e, the second information may be sent to the DU in the network device by using the L1/L2 message. After parsing the second information, the DU learns of, based on the specific content of the effective reference signal set, the specific reference signals that need to be sent to the terminal device. For example, the second information indicates the identifier of the effective reference signal set. The CU has previously notified the DU of the plurality of reference signal sets and the corresponding identifiers, and the DU may find the corresponding effective reference signal set based on the identifier indicated by the second information.

The foregoing step 502 describes a case in which when determining that the first effective condition is met, the terminal device performs radio link monitoring and/or radio link recovery based on the first reference signal set corresponding to the first effective condition. In an example, in the scenario in which the terminal device sends the second information to the network device, the terminal device may not need to consider a sequence of performing radio link monitoring and/or radio link recovery based on the first reference signal set and sending the second information. In another example, after determining that the first effective condition is met and successfully sending the second information, the terminal device performs radio link monitoring and/or radio link recovery based on the first reference signal set corresponding to the first effective condition.

In addition, even if the terminal device does not notify the network device of the effective reference signal set, the network device may infer effective reference signal sets at different moments or in different time periods, and the network device learns of, based on the effective reference signal set, the specific reference signals that need to be sent to the terminal device.

### Embodiment 4:

A network device configures a plurality of reference signal sets and identifiers respectively corresponding to the plurality of reference signal sets for a terminal device at a time. Then, the network device determines an effective reference signal set in the plurality of configured reference signal sets, and indicates, to the terminal device, an identifier corresponding to the effective reference signal set. The terminal device performs radio link monitoring and/or radio link recovery by using the reference signal set corresponding to the identifier indicated by the network device.

FIG. 6 is a schematic flowchart of a communication method according to an embodiment of this application. The method includes the following steps.

Step 601: The network device sends first information, and correspondingly, the terminal device receives the first information. The first information indicates a plurality of reference signal sets and a plurality of identifiers, and the plurality of reference signal sets are in one-to-one correspondence with the plurality of identifiers.

The network device sends a reference signal to the terminal device in a form of a beam. For a plurality of reference signals in the reference signal set, different reference signals are usually sent by using different beams. Reference signals in different reference signal sets are partially different or completely different. The reference signal may be a CSI-RS or an SSB. The first information may be carried in an RRC message/RRC signaling, for example, carried in an RRCReconfiguration message/RRCReconfiguration signaling.

In the scenario in which the CU is separated from the DU shown in FIG. 2e, the DU in the network device generates the first information. That the network device sends the first information to the terminal device in step 601 may be replaced with that the DU in the network device generates the first information, the DU in the network device sends the first information to the CU in the network device, and then the CU in the network device sends the first information to the terminal device.

Optionally, step 602: The terminal device sends third information to the network device, and correspondingly, the network device receives the third information. The third information indicates a first parameter, and the first parameter is used to determine a first reference signal set in the plurality of reference signal sets.

The second information indicates the first parameter, and includes one or more of the following. It may be understood that the following sequence numbers (1), (2), ..., and (5) are merely for ease of description, and do not indicate importance degrees and priorities of content corresponding to the sequence numbers.
(1) The second information indicates a first distance, where the first distance is a distance between the terminal device and a reference point corresponding to a serving cell. The reference point is, for example, a center point of a coverage area of the serving cell. In an earth-moving cell (earth-moving cell) scenario, a location of the serving cell changes with movement of a satellite. In this case, the distance between the terminal device and the reference point corresponding to the serving cell also changes with the movement of the satellite. The network side may pre-estimate, based on a movement trajectory of the satellite, an association relationship between the distance between the terminal device and the reference point corresponding to the serving cell and the beam of the reference signal, and then the network side may determine association relationships between different reference signal sets and distance conditions, and indicate the association relationships to the terminal device, so that the terminal device performs radio link monitoring and/or radio link recovery based on a reference signal set corresponding to a met distance condition.
   In addition, the condition is also applicable to a scenario in which the terminal device moves in an earth-fixed cell.
(2) The second information indicates a first area location in which the terminal device is located. When the network device moves, the network side may pre-estimate, based on the movement trajectory of the satellite, an association relationship between an area location of the terminal device and the beam of the reference signal, and then the network side may determine association relationships between different reference signal sets and area location conditions, and indicate the association relationships to the terminal device, so that the terminal device performs radio link monitoring and/or radio link recovery based on a reference signal set corresponding to a met area location condition. When the effective reference signal set is determined based on the area location of the terminal device, reference may be further made to the movement of the satellite.
(3) The second information indicates information about receiving, by the terminal device, an SSB sent by the network device. The information about the reception may be understood as information about an optimal receive beam. In the earth-moving cell (earth-moving cell) scenario, a location of a first cell changes with the movement of the satellite. In this case, the optimal beam used by the terminal device to receive the SSB from the first cell may change with the movement of the satellite. The network side may pre-estimate, based on the movement trajectory of the satellite, an association relationship between the optimal receive beam and the transmit beam of the reference signal, and then the network side may determine association relationships between different reference signal sets and receive beam conditions, and indicate the association relationships to the terminal device, so that the terminal device performs radio link monitoring and/or radio link recovery based on a reference signal set corresponding to a met receive beam condition.

Step 603: The network device sends second information to the terminal device, and correspondingly, the terminal device receives the second information. The second information indicates a first identifier, and the first identifier is an identifier of the first reference signal set. The first identifier belongs to the plurality of identifiers, the first reference signal set belongs to the plurality of reference signal sets, and the second information is carried in a layer 1 or layer 2 message.

The network device may determine the effective first reference signal set based on time information. Alternatively, the network device may determine, based on the first parameter indicated by the third information, the effective first reference signal set in the plurality of reference signal sets indicated by the first information, indicate the effective first reference signal set to the terminal device. Accuracy of the effective first reference signal set determined based on the first parameter reported by the terminal device is high.

The second information may indicate the first identifier, that is, the effective reference signal set, by using a value of a bit. For example, the first information indicates three reference signal sets, and the second information occupies at least two bits. For example, the first information indicates five reference signal sets, and the second information occupies at least three bits. An example in which two bits are occupied is used for description. 00 represents an identifier corresponding to a reference signal set 1, 01 represents an identifier corresponding to a reference signal set 2, and 10 represents an identifier corresponding to a reference signal set 3. For another example, the second information indicates the first identifier, that is, the effective reference signal set, in a form of a bitmap. A reference signal set corresponding to a bit whose value is 1 is the effective reference signal set. For example, the first information indicates three reference signal sets, and a bitmap of the second information is 001, indicating the identifier corresponding to the reference signal set 3.

The terminal device may send the third information to the network device by using an RRC message or an L1/L2 message, and the network device may send the second information to the terminal device by using an L1/L2 message. For example, the second information is carried on a downlink physical channel, or the second information is carried in a MAC layer control element. For example, in the scenario in which the CU is separated from the DU shown in FIG. 2e, the third information may be sent to the CU in the network device. After parsing the third information, the CU determines the effective reference signal set, and notifies the CU of an identifier of the effective reference signal set. The CU sends the second information to the terminal device. For another example, in the scenario in which the CU is separated from the DU shown in FIG. 2e, the second information may be sent to the DU in the network device, the CU in the network device sends the first information to the DU in the network device, and the DU in the network device determines the second information based on the first information, and sends the second information to the terminal device.

Step 604: The terminal device performs radio link monitoring and/or radio link recovery based on the first reference signal set corresponding to the first identifier.

Related content of performing radio link monitoring and/or radio link recovery based on the reference signal in the reference signal set may be described above, and details are not described herein again. In the scenario in which the CU is separated from the DU shown in FIG. 2e, the DU in the network device generates the reference signal, and sends the reference signal.

Generally, the reference signal set is configured for the terminal device by using RRC signaling/higher layer signaling, and the identifier of the effective reference signal set is sent to the terminal device by using a layer 1 or layer 2 message. For the terminal device and the network device, processing load of processing the RRC signaling is heavier than that of processing the layer 1 or layer 2 message. Therefore, in comparison with configuring a plurality of reference signal sets for the terminal device by the network device at a plurality of times, configuring the plurality of reference signal sets for the terminal device by the network device at a time can reduce signaling exchange between the network device and the terminal device, and can reduce processing load of the terminal device and the network device.

It may be understood that, to implement functions in the foregoing embodiments, the terminal device and the network device includes corresponding hardware structures and/or software modules for performing the functions. A person skilled in the art should be easily aware that, in this application, units and method steps in the examples described with reference to embodiments disclosed in this application can be implemented by hardware or a combination of hardware and computer software. Whether a function is performed by hardware or hardware driven by computer software depends on particular application scenarios and design constraint effective conditions of the technical solutions.

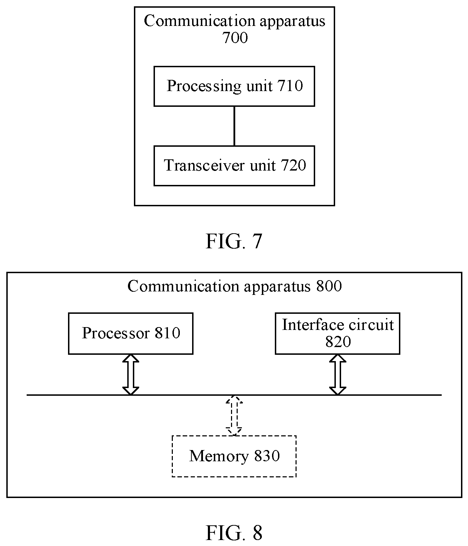

FIG. 7 and FIG. 8 are diagrams of possible structures of communication apparatuses according to embodiments of this application. The communication apparatuses may be configured to implement functions of the terminal device and the network device in the foregoing method embodiments, and therefore can also achieve beneficial effects of the foregoing method embodiments. In embodiments of this application, the communication apparatus may be the terminal device shown in FIG. 2a, FIG. 2b, FIG. 2c, and FIG. 2d, may be the access network device shown in FIG. 2a, FIG. 2b, FIG. 2c, and FIG. 2d, or may be a module (for example, a chip) used in a terminal device or a network device.

As shown in FIG. 7, a communication apparatus 700 includes a processing unit 710 and a transceiver unit 720.

For example, the communication apparatus 700 is configured to implement functions of the terminal device or the first network device in the method embodiments shown in FIG. 3, FIG. 4, FIG. 5, and FIG. 6. The transceiver unit 720 may perform a receiving action and a sending action that are performed by the terminal device or the first network device in the foregoing method embodiments. The processing unit 710 may perform an action other than the sending action and the receiving action in the actions performed by the terminal device or the first network device in the foregoing method embodiments.

For example, when the communication apparatus 700 is configured to implement the function of the terminal device in the method embodiment shown in FIG. 3, the transceiver unit 720 is configured to: receive first information in a first cell, and receive an SSB in a second cell. The processing unit 710 is configured to parse the first information.

For example, when the communication apparatus 700 is configured to implement the function of the first network device in the method embodiment shown in FIG. 3, the transceiver unit 720 is configured to: send, in a first cell, first information to the terminal device, and send, in a second cell, an SSB to the terminal device. The processing unit 710 is configured to generate the first information.

For more detailed descriptions of the processing unit 710 and the transceiver unit 720, directly refer to related descriptions in the method embodiments shown in FIG. 3, FIG. 4, FIG. 5, and FIG. 6. Details are not described herein again. The processing unit 710 may be implemented by a processor, and the transceiver unit 720 may be implemented by a transceiver.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, store input data required by the processor 810 to run instructions, or store data generated after the processor 810 runs instructions. Sometimes, the interface circuit 820 may also be understood as a part of the processor 810. In this case, the communication apparatus 800 includes the processor 810.

When the communication apparatus 800 is configured to implement the methods shown in FIG. 3, FIG. 4, FIG. 5, and FIG. 6, the processor 810 is configured to implement a function of the processing unit 710, and the interface circuit 820 is configured to implement a function of the transceiver unit 720.

When the communication apparatus is the chip used in the terminal device, the chip in the terminal device implements the functions of the terminal device in the foregoing method embodiments. That the chip in the terminal device receives information from the network device may be understood as that the information is first received by another module (for example, a radio frequency module or an antenna) in the terminal device, and then sent by the module to the chip in the terminal device. That the chip in the terminal device sends information to the network device may be understood as that the information is first sent to another module (for example, a radio frequency module or an antenna) in the terminal device, and then sent by the module to the network device.

When the communication apparatus is the chip used in the network device, the chip in the network device implements the functions of the network device in the foregoing method embodiments. That the chip in the network device receives information from a terminal device may be understood as that the information is first received by another module (for example, a radio frequency module or an antenna) in the network device, and then sent by the module to the chip in the network device. That the chip in the network device sends information to the terminal device may be understood as that the information is delivered to another module (for example, a radio frequency module or an antenna) in the network device, and then sent by the module to the terminal device. The module in the network device herein may be a baseband chip in the network device, or may be a DU or another module. The DU herein may be a DU in an open radio access network O-RAN architecture.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives, via another entity, the information sent by the entity A. The entities A and B herein may be network devices or terminal devices, or may be modules in network devices or modules in terminal devices. Information sending and receiving may be information exchange between the network device and the terminal device. Information sending and receiving may alternatively be information exchange between two network devices, for example, information exchange between a CU and a DU. Information sending and receiving may alternatively be information exchange between different modules in an apparatus, for example, information exchange between the chip in the terminal device and another module in the terminal device, or information exchange between the chip in the network device and another module in the network device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

An embodiment of this application further provides a computer-readable storage medium that stores a computer program. When the computer program is executed by a computer, the computer is caused to perform the foregoing communication methods. In other words, the computer program includes instructions used to implement the foregoing communication.

An embodiment of this application further provides a computer program product, including computer program code. When the computer program code is run on a computer, the computer is caused to perform the foregoing communication methods.

An embodiment of this application further provides a communication system. The communication system includes a network device and a terminal device that perform the foregoing communication methods.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM) (also referred to as a read-only optical disc), or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in a base station or a terminal. Certainly, the processor and the storage medium may exist in the base station or the terminal as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a first control plane network element, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or "one or more of" or a similar expression means any combination of these items, including a single item (piece) or any combination of a plurality of items (pieces). For example, at least one of a, b, or c or one or more of a, b, or c, represents a, b, c, a and b, a and c, b and c, or a, b, and c. Each of a, b, or c may be singular or plural.

Ordinal numbers such as "first" and "second" mentioned in embodiments of this application are used to distinguish between a plurality of objects, but are not used to limit sizes, content, an order, a time sequence, priorities, importance degrees, or the like of the plurality of objects. In addition, these names do not indicate different included content, transmit ends/receive ends, sending sequences, sizes, application scenarios, priorities, importance degrees, or the like of the two pieces of information. In addition, step numbers in embodiments described in this application are merely for distinguishing between different steps, but are not for limiting a sequence of the steps.

## Claims

1. A communication method, applied to a terminal device, and comprising:
receiving, in a first cell, first information from a first network device, wherein the first information indicates a plurality of pieces of time domain configuration information and a plurality of effective conditions, the plurality of pieces of time domain configuration information are in one-to-one correspondence with the plurality of effective conditions, and the first cell is a serving cell of the terminal device; and
when a first effective condition is met, receiving, in a second cell, a synchronization signal and physical broadcast channel block SSB from a second network device based on first time domain configuration information corresponding to the first effective condition, wherein the second cell is a neighboring cell of the first cell, the first network device and the second network device are the same or different, the first effective condition belongs to the plurality of effective conditions, and the first time domain configuration information belongs to the plurality of pieces of time domain configuration information.

2. The method according to claim 1, wherein any effective condition comprises one or more of the following:
a propagation delay difference PDD condition, a distance condition, a distance difference condition, a time condition, and a receiving condition for an SSB sent by the first network device in the first cell, wherein
the PDD is a difference between a first transmission delay and a second transmission delay, wherein the first transmission delay is a transmission delay between the terminal device and the first network device, the second transmission delay is a transmission delay between the terminal device and the second network device, and the first network device and the second network device are different; or the first transmission delay is a transmission delay between the terminal device and a first satellite corresponding to the first cell, the second transmission delay is a transmission delay between the terminal device and a second satellite corresponding to the second cell, the first network device and the second network device are the same or different, and the first satellite and the second satellite are different;
the distance is a distance between the terminal device and a reference point corresponding to the first cell; and
the distance difference is a difference between a first distance and a second distance, the first distance is a distance between the terminal device and the reference point corresponding to the first cell, and the second distance is a distance between the terminal device and a reference point corresponding to the second cell.

3. The method according to claim 1 or 2, further comprising:
receiving, in the first cell, second information from the first network device, wherein the second information indicates SSBs that need to be measured and that respectively correspond to the plurality of pieces of time domain configuration information; and
the receiving, in the second cell, the SSB from the second network device based on the first time domain configuration information corresponding to the first effective condition comprises:
receiving, in the second cell based on the first time domain configuration information corresponding to the first effective condition, an SSB that needs to be measured, corresponds to the first time domain configuration information, and is from the second network device.

4. The method according to any one of claims 1 to 3, further comprising:
sending, in the first cell, third information to the first network device, wherein the third information indicates the first time domain configuration information.

5. A communication method, applied to a first network device, and comprising:
generating first information; and
sending, in a first cell, the first information to a terminal device, wherein the first information indicates a plurality of pieces of time domain configuration information and a plurality of effective conditions, the plurality of pieces of time domain configuration information are in one-to-one correspondence with the plurality of effective conditions, the first information is used to: receive, in a second cell by the terminal device when any effective condition is met, a synchronization signal and physical broadcast channel block SSB from a second network device based on any piece of time domain configuration information corresponding to the any effective condition, the first cell is a serving cell of the terminal device, the second cell is a neighboring cell of the first cell, and the first network device and the second network device are the same or different.

6. The method according to claim 5, wherein any effective condition comprises one or more of the following:
a propagation delay difference PDD condition, a distance condition, a distance difference condition, a time condition, and a receiving condition for an SSB sent by the first network device in the first cell, wherein
the PDD is a difference between a first transmission delay and a second transmission delay, wherein the first transmission delay is a transmission delay between the terminal device and the first network device, the second transmission delay is a transmission delay between the terminal device and the second network device, and the first network device and the second network device are different; or the first transmission delay is a transmission delay between the terminal device and a first satellite corresponding to the first cell, the second transmission delay is a transmission delay between the terminal device and a second satellite corresponding to the second cell, the first network device and the second network device are the same or different, and the first satellite and the second satellite are different;
the distance is a distance between the terminal device and a reference point corresponding to the first cell; and
the distance difference is a difference between a first distance and a second distance, the first distance is a distance between the terminal device and the reference point corresponding to the first cell, and the second distance is a distance between the terminal device and a reference point corresponding to the second cell.

7. The method according to claim 5 or 6, further comprising:
sending, in the first cell, second information to the terminal device, wherein the second information indicates SSBs that need to be measured and that respectively correspond to the plurality of pieces of time domain configuration information, and the second information is used to: when any effective condition is met, receive, by the terminal device based on any piece of time domain configuration information corresponding to the any effective condition, an SSB that needs to be measured, corresponds to the any piece of time domain configuration information, and is sent by the second network device in the second cell.

8. The method according to any one of claims 5 to 7, further comprising:
receiving, in the first cell, third information from the terminal device, wherein the third information indicates time domain configuration information of a met effective condition; and
scheduling the terminal device based on the time domain configuration information of the met effective condition.

9. A communication method, applied to a terminal device, and comprising:
receiving, in a first cell, first information from a first network device, wherein the first information indicates a plurality of pieces of time domain configuration information and a plurality of identifiers, the plurality of pieces of time domain configuration information are in one-to-one correspondence with the plurality of identifiers, and any one of the plurality of pieces of time domain configuration information is used by the terminal device to receive a synchronization signal and physical broadcast channel block SSB;
receiving, in the first cell, second information from the first network device, wherein the second information indicates a first identifier, the first identifier indicates first time domain configuration information, the first identifier belongs to the plurality of identifiers, the first time domain configuration information belongs to the plurality of pieces of time domain configuration information, and the second information is carried in a layer 1 or layer 2 message; and
receiving, in a second cell, an SSB from a second network device based on the first time domain configuration information, wherein the second cell is a neighboring cell of the first cell, and the first network device and the second network device are the same or different.

10. The method according to claim 9, further comprising:
sending, in the first cell, third information to the first network device, wherein the third information indicates a first parameter, and the first parameter is used to determine the first time domain configuration information in the plurality of pieces of time domain configuration information.

11. The method according to claim 10, wherein the first parameter specifically comprises one or more of the following:
a first PDD, wherein the first PDD is a difference between a first transmission delay and a second transmission delay, wherein the first transmission delay is a transmission delay between the terminal device and the first network device, the second transmission delay is a transmission delay between the terminal device and the second network device, and the first network device and the second network device are different; or the first transmission delay is a transmission delay between the terminal device and a first satellite corresponding to the first cell, the second transmission delay is a transmission delay between the terminal device and a second satellite corresponding to the second cell, the first network device and the second network device are the same or different, and the first satellite and the second satellite are different;
a first distance, wherein the first distance is a distance between the terminal device and a reference point corresponding to the first cell;
a first distance difference, wherein the first distance difference is a difference between a first distance and a second distance, the first distance is a distance between the terminal device and the reference point corresponding to the first cell, and the second distance is a distance between the terminal device and a reference point corresponding to the second cell; and
information about receiving, by the terminal device, an SSB sent in the first cell.

12. The method according to any one of claims 9 to 11, further comprising:
receiving, in the first cell, fourth information from the first network device, wherein the fourth information indicates SSBs that need to be measured and that respectively correspond to the first time domain configuration information; and
the receiving, in the second cell, the SSB from the second network device based on the first time domain configuration information comprises:
receiving, in the second cell based on the first time domain configuration information, an SSB that needs to be measured, corresponds to the first time domain configuration information, and is from the second network device.

13. A communication method, applied to a first network device, and comprising:
sending, in a first cell, first information to a terminal device, wherein the first information indicates a plurality of pieces of time domain configuration information and a plurality of identifiers, and the plurality of pieces of time domain configuration information are in one-to-one correspondence with the plurality of identifiers; and sending, in the first cell, second information to the terminal device, wherein the second information indicates a first identifier, the first identifier indicates first time domain configuration information, the first identifier belongs to the plurality of identifiers, the first time domain configuration information belongs to the plurality of pieces of time domain configuration information, the first time domain configuration information is used by the terminal device to receive a synchronization signal and physical broadcast channel block SSB sent by a second network device in a second cell, the second cell is a neighboring cell of the first cell, the first network device and the second network device are the same or different, and the second information is carried in a layer 1 or layer 2 message.

14. The method according to claim 13, further comprising:
receiving, in the first cell, third information from the terminal device, wherein the third information indicates a first parameter, and the first parameter is used to determine the first time domain configuration information in the plurality of pieces of time domain configuration information.

15. The method according to claim 14, wherein the first parameter specifically comprises one or more of the following:
a first PDD, wherein the first PDD is a difference between a first transmission delay and a second transmission delay, wherein the first transmission delay is a transmission delay between the terminal device and the first network device, the second transmission delay is a transmission delay between the terminal device and the second network device, and the first network device and the second network device are different; or the first transmission delay is a transmission delay between the terminal device and a first satellite corresponding to the first cell, the second transmission delay is a transmission delay between the terminal device and a second satellite corresponding to the second cell, the first network device and the second network device are the same or different, and the first satellite and the second satellite are different;
a first distance, wherein the first distance is a distance between the terminal device and a reference point corresponding to the first cell;
a first distance difference, wherein the first distance difference is a difference between a first distance and a second distance, the first distance is a distance between the terminal device and the reference point corresponding to the first cell, and the second distance is a distance between the terminal device and a reference point corresponding to the second cell; and
information about receiving, by the terminal device, an SSB sent in the first cell.

16. The method according to any one of claims 13 to 15, further comprising:
sending, in the first cell, fourth information to the terminal device, wherein the fourth information indicates an SSB that needs to be measured and that corresponds to the first time domain configuration information, and the fourth information is used by the terminal device to receive, based on the first time domain configuration information, the SSB that needs to be measured, corresponds to the first time domain configuration information, and is sent by the second network device in the second cell.

17. A communication apparatus, comprising a module configured to perform the method according to any one of claims 1 to 16.

18. A communication apparatus, comprising a processor, wherein the processor is coupled to a memory;
the memory is configured to store a computer program or instructions; and
the processor is configured to execute a part or all of the computer program or the instructions in the memory, and when the part or all of the computer program or the instructions are executed, the processor is configured to implement the method according to any one of claims 1 to 16.

19. A communication apparatus, comprising a processor and a memory, wherein
the memory is configured to store a computer program or instructions; and
the processor is configured to execute a part or all of the computer program or the instructions in the memory, and when the part or all of the computer program or the instructions are executed, the processor is configured to implement the method according to any one of claims 1 to 16.

20. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 16 by using a logic circuit or by executing code instructions.

21. A computer-readable storage medium, wherein the storage medium stores a computer program or instructions, and when the computer program or the instructions are executed by a communication apparatus, the method according to any one of claims 1 to 16 is implemented.

22. A computer program product, wherein the computer program product comprises computer instructions, and when the computer instructions are run on a computer, the method according to any one of claims 1 to 16 is implemented.
